# EUROPEAN PATENT SPECIFICATION

(11) **EP 1 126 434 B1**
(45) Date of publication and mention of the grant of the patent: **16.03.2011**
(21) Application number: 00127836.5
(22) Date of filing: 19.12.2000
(51) Int. Cl.: G10H 1/00, G04G 13/02

(54) **Body-wearable type music reproducing apparatus**
Tragbare Vorrichtung zur Wiedergabe von Musik
Dispositif portable pour la reproduction de musique

(30) Priority: 21.12.1999 JP 36305699
(43) Date of publication of application: 22.08.2001
(73) Proprietor: CASIO COMPUTER CO., LTD., Shibuya-ku, Tokyo 151-8543 (JP)
(72) Inventor: Kita, Kazunori, Casio Computer Co.,Ltd, Hamura-shi, Tokyo 205-8555 (JP); Nakazawa, Akira, Casio Computer Co.,Ltd, Hamura-shi, Tokyo 205-8555 (JP); Michitsuta, Satomi, Casio Computer Co.,Ltd, Hamura-shi, Tokyo 205-8555 (JP)
(74) Representative: Grünecker, Kinkeldey, Stockmair & Schwanhäusser Anwaltssozietät

(56) References cited:
- WO-A-98/14933
- DE-A- 4 015 323
- US-A- 4 478 525
- US-A- 5 369 797
- US-A- 5 444 673

## Description

The present invention relates to body wearable-type music reproducing devices and music reproducing systems, and more particularly to a portable music reproducing device using a small semiconductor memory and wearable on a user' s body and a music reproducing system which comprises the music reproducing device.

Portable music reproducing apparatus have been used. In such apparatus, a storage medium such as a magnetic tape or an optical disk such as a CD or MD, which has stored music data is set to reproduce the music data in a reproducing system corresponding to the storage medium. Thus, corresponding music is from earphones or headphones. In order to reproduce or stop the music, a switch provided on the apparatus body is operated or a remote control unit provided in the earphone cord is operated.

As semiconductor memories are formed of integrated circuits of an increasing density at a decreasing cost, portable music reproducing apparatus which use a semiconductor memory card comprising a small removable non-volatile memory as a music data storage medium have been developed. Such portable music reproducing apparatus decrease in size and have resistance to vibrations/shocks, and improved portability. An example for such a portable music reproducing apparatus is the Rio PMP300 from Diamond.

It is presupposed that the portable music reproducing apparatus is carried by a user in a bag or pocket. Thus, the user must hold the apparatus with his or her hand during sport in which the user is active without having the bag or when the user wears pocketless clothes. This would hinder the user's activity. When the user reproduces or stops music, the user must take out the reproducing apparatus from the bag or pocket and operate the switch provided on the apparatus body. When a remote control device connected to the earphone cord is operated, the remote control device is difficult to fix at a fixed position and hence to manipulate. Thus, it takes much time to operate the apparatus and is impossible to operate the apparatus within a crowded train as the case may be.

From US patent no. 5, 903, 868 a digital audio recorder and playback device is known, which may be integrated into a wristwatch. This device, however, cannot reproduce any pre-recorded music data since it is only capable of reproducing audio data that has been acquired by means of its recording function.

The present invention solves such problems. It is an object of the present invention to provide a wristwatch with an integrated music reproducing apparatus and a music reproducing system, usable by a user even during the user's exercise without hindering the user's exercise, that enable a user to acquire desired music data rapidly and easily and to reproduce music based on the music data.

This is achieved by the features of the independent claims. Preferred embodiments are the subject matter of dependent claims.

According to the features of claim 1, music is reproduced based on the music data stored in the storing means provided on one of the apparatus body and the band in a state where the apparatus body is worn on the user's body.

Thus, the apparatus has excellent portability by which the user can rapidly and easily carry the apparatus worn on the user's body even during exercise without hindering the user's action.

In addition, the apparatus body has the first connector for connection to the external device and the second connector for connecting the music hearing unit to the adapter to transmit the music reproduced by the music reproducing means to the music hearing unit. Thus, the user can freely change, as the user likes, a manner in which the reproducing apparatus is used. For example, when music data is acquired from the external device, the apparatus body may be connected via the first connector to the external device. Then, in order that the music is to be reproduced based on the acquired music data in a state where the apparatus body is worn on the user's body, the reproducing apparatus is connected to the music hearing unit via the adapter. When no music is to be reproduced, the hearing unit may be removed from the apparatus body for using the apparatus like a general wristwatch.

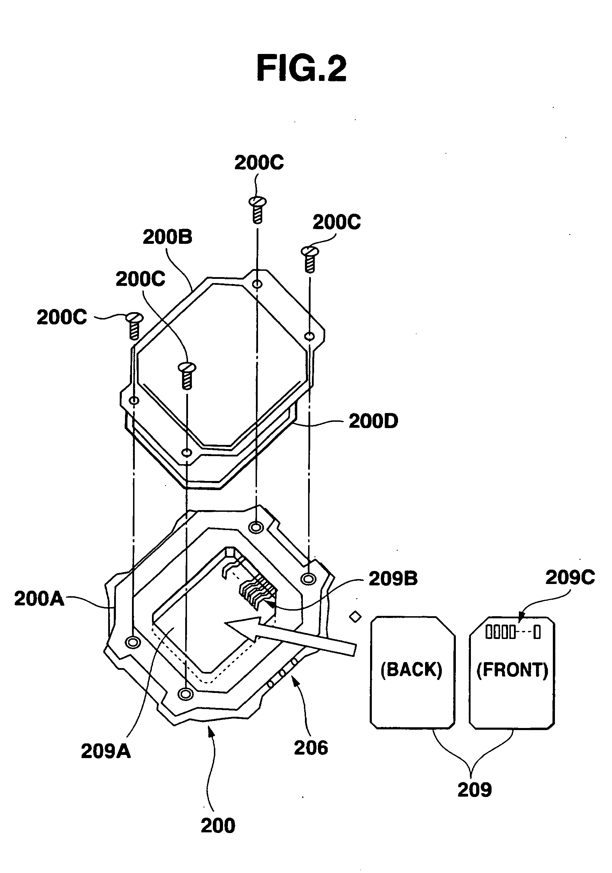

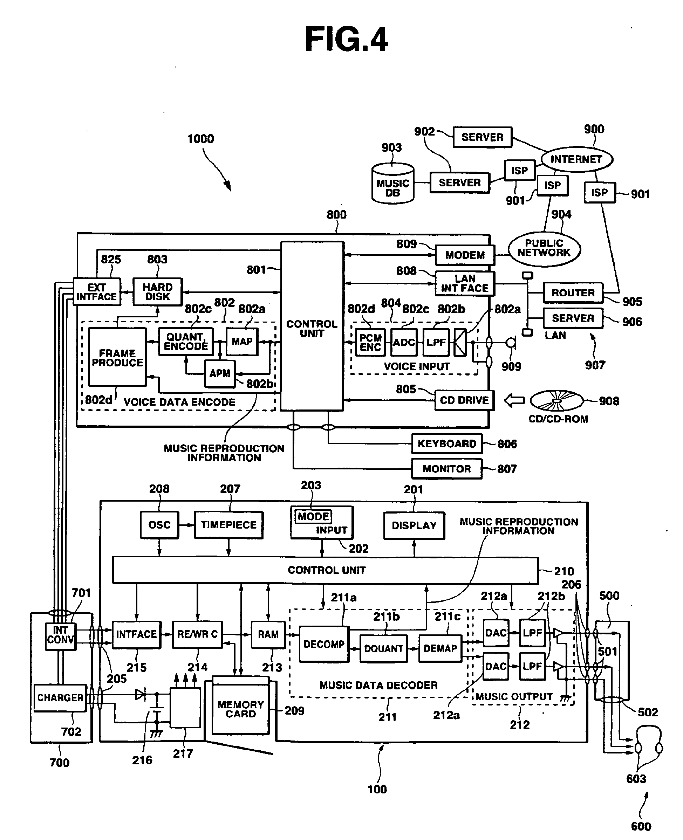

The storage device may comprise a semiconductor storage medium (for example, a memory card of FIGS. 2 and 4) provided removable in one of the apparatus body and the band.

Thus, the reproducing apparatus itself is reduced in size to thereby improve its portability. The user can easily replace a recording medium with another one, which has stored music data, desired by the user. In addition, the storage capacity of the recording medium can be increased flexibly. The reproducing apparatus is not required to include a driver such as a CD or MD music reproducing unit, so that it can resist shocks/vibrations to thereby reproduce high quality music in which no sounds skip undesirably.

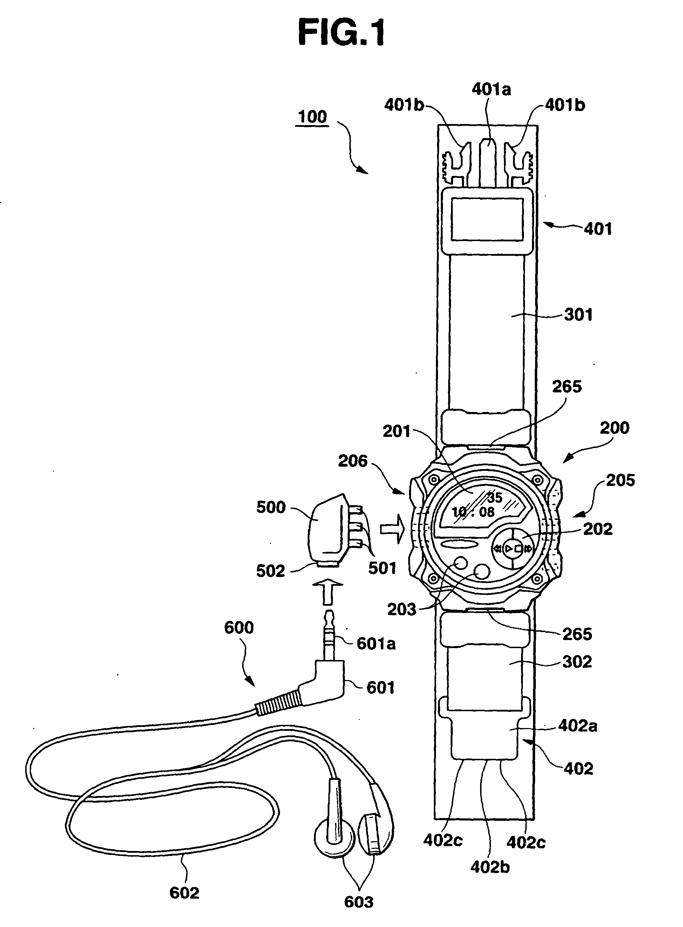

The apparatus body may further comprise:
a display unit (for example, a display 201 of FIG. 1);
a timepiece means (for example, a timepiece 207 of FIG. 4) for measuring time data; and
display control means (for example, a control unit 210 of FIG. 4) for displaying on the display unit the time data measured by the timepiece means.

In the apparatus body, the timepiece means measures time data and the display control means displays on the display unit the time data measured by the timepiece means. Thus, the apparatus body is capable of fulfilling a timepiece function including display of time in addition to the music reproducing function in a state where the reproducing apparatus is worn on the user's body.

This music reproducing apparatus may further comprise:
mode setting means (for example, mode switches 203 of FIG. 1) for setting one of a timepiece mode and a music mode; and
control means (for example, a control unit 210 of FIG. 4) for controlling the display control means such that the time data is displayed on the display unit when the time mode is set by the mode setting means and for controlling the music reproducing means such that music is reproduced when the music mode is set by the mode setting means.

In this apparatus, the mode setting means sets one of the timepiece and music modes. The control means controls the display control means such that the time data is displayed on the display unit when the time mode is set by the mode setting means, and also controls the music reproducing means such that music is reproduced when the music mode is set by the mode setting means. Thus, changing the mode simply to a corresponding one in a state where the reproducing apparatus is worn on the user's body instantaneously performs one of time display and music reproduction. Since the user is able to select a respective one of a plurality of functions in correspondence to a set mode, the user is not required to carry a corresponding number of various portable devices to thereby improve portability of the apparatus.

In the first-mentioned apparatus, the apparatus body may further comprise:
a display unit (for example, a display unit 201 of FIG. 1); and
display control means (for example, a control unit 210 of FIG. 4) for displaying on the display unit data on music reproduced by the music reproducing means.

This apparatus comprises a display unit. The display control means displays on the display unit data on music reproduced by the music reproducing means. Thus, the music is reproduced and data on the music reproduced is displayed on the display unit with the music reproducing apparatus being worn on the user's body. Thus, a large amount of information is displayed and manipulation for music reproduction is easily performed.

The adapter may comprise:
a connection element (for example, connection pins 501 of FIG. 1) to be connected to the second connector, and a jack (for example, jack 502 of FIG. 1) for receiving a plug (for example, plug 601a of FIG. 1) of the music hearing unit.

In this case, a music reproducing signal from the connector is delivered via the adapter to the plug of the music hearing unit having a special shape used very often for listening to music.

The apparatus body may further comprise:
write control means (for example, a read/write control unit 214 of FIG. 4) for controlling writing to the storage means the music data delivered from the external device connected to the first connector.

The write control means controls writing to the storage means the music data delivered from the external device connected to the first connector. Thus, the user is able to rapidly and easily acquire desired music data from the external device and reproduce music based on the desired music data.

The music reproducing apparatus further comprise:
mode setting means (for example, a mode switch 203 of FIG. 1) for setting one of a communication mode and a music mode; and
control means (for example, a control unit 210 of FIG. 4) for controlling the write control means to write to the storage means the music data delivered from the external device when the communication mode is set by the mode setting means and for controlling the music reproducing means to reproduce music when the music mode is set by the mode setting means.

The mode setting means sets one of the communication and music modes. The control means controls the write control means to write to the storage means the music data delivered from the external device when the communication mode is set by the mode setting means, and also controls the music reproducing means to reproduce music when the music mode is set by the mode setting means. Thus, the user is able to wear or take off the apparatus on or from the user's body depending on the set mode and to rapidly and easily perform one of communication with the external device and music reproduction.

The present invention also provides a music reproducing system (for example, a music reproducing system 1000 of FIG. 4).

According to this invention, the user of the music reproducing device can rapidly and easily acquire desired music data from the external device and reproduce corresponding music based on the acquired music data by the music reproducing device carried anytime and anywhere.

Moreover the user of the music reproducing device can rapidly and easily acquire various music data from the external device and deliver the music data to the music reproducing device to reproduce corresponding music by the music reproducing device carried anytime and anywhere.
FIG. 1 shows a whole wristband-type music reproducing apparatus as a first embodiment of the present invention;
FIG. 2 is a substantially exploded perspective view of the music reproducing apparatus of FIG. 1 viewed from its back, showing how to set a memory card in the apparatus;
FIG. 3A is an enlarged back view of the inside of the wristband-type music reproducing apparatus of FIG. 1;
FIG. 3B is a vertical cross-sectional side view of the music reproducing device taken along a line B-B' of FIG. 3A;
FIG. 4 is a block diagram of a music reproducing system 1000 which comprises a wristband-type music reproducing device 100 and an external device 800 connected to the reproducing device 100;
FIG. 5 is a block diagram of an encoder and a decoder of an MPEG audio system (layer I or II);
FIG. 6 is a block diagram of an encoder and a decoder of an MPEG audio system (layer III);
FIG. 7 illustrates a composition of a bit stream of MPEG audio data;
FIG. 8 is a substantial plan view of an external device adapter 700;
FIG. 9 is a plan view of a combination of the wristband-type music reproducing device 200 and the external device adapter 700 where the internal structure of the adapter 700 is shown;
FIG. 10A is a cross-sectional view taken along a line A-A' of FIG. 9;
FIGS. 10B and C each are a different enlarged view of an encircled section where the adapter 700 is connected to the reproducing device 200;
FIGS. 11A and B each show a different use of the wristband-type music reproducing device 100 worn on the user;
FIG. 12A is a perspective view of another example of the memory card receiver 209A open before a memory card 209 is received;
FIG. 12B is a perspective view of the another example of the memory card receiver 209A closed after the memory card is received;
FIG. 13A is a perspective view of still another example of the memory card receiver 209A open before the memory card is received;
FIG. 13B is a perspective view of the still another example of the memory card receiver 209A closed after the memory card is received;
FIG. 14A is a partly perspective front view of further still another example of the memory card receiver 209A open before the memory card is received;
FIG. 14B is a front view of the further still another example of the memory card receiver 209A closed after the memory card is received;
FIG. 15 is a front view of a further example of the memory card receiver 209A open before the memory card is received;
FIG. 16 is a front view of a still further example of the memory card receiver 209A with an open cover shown in a perspective view before the memory card is received;
FIGS. 17A, B and C each illustrate a method of acquiring encoded music data in the music reproducing system 1000;
FIGS. 18A, B and C each illustrate a different method of acquiring encoded music data in the music reproducing system 1000;
FIG. 19 is a block diagram of a system which comprises an external device 800, a memory card 209, and a wristband-type music reproducing device 100 which have the functions of recognizing/encoding ciphered voice data;
FIG. 20 shows wireless headphones 2100 and a wristband-type music reproducing device 2200 which compose a wireless music reproducing system 2000 as a second embodiment;
FIGS. 21A and B are block diagrams of the wristband-type music reproducing device 2200 and the wireless headphones 2100, respectively;
FIGS. 22A, B and C each illustrate a different use of the wireless music reproducing system 2000;
FIGS. 23A and B are block diagrams of a wristband-type music reproducing device 2400 and a wireless headphones 2300, respectively, of a wireless music reproducing system 3000 as a third embodiment;
FIG. 24 shows a headphone-type music reproducing device 4100 and a wristband-type remote control device 4200 which compose a wireless music reproducing system 4000 as a fourth embodiment;
FIGS. 25A and B are block diagrams of the headphone-type music reproducing device 4100 and the wristband-type remote control device 4200, respectively;
FIGS. 26A and B show an earphone-type music reproducing device 2700A and a pair of such earphone-type music reproducing devices 2700A connected by a cord, respectively;
FIG. 27 is a block diagram of a picture/voice reproducing system 5000 which comprises a picture/voice reproducing device 5100 and an external device 5800, as a fifth embodiment;
FIG. 28 is a block diagram of an encoder and a decoder for a JPEG picture (still picture) used in the system of FIG. 27;
FIGS. 29 A and B are block diagrams of an MPEG encoder and an MPEG decoder, respectively, for a (dynamic) picture; and
FIG. 30 illustrates a composition of a bit stream in an MPEG 1 system.

Referring to FIGS.1-30, a body wearable-type music reproducing device according to the present invention and a music reproducing system which comprises the music reproducing device will be described next in detail.

### [First Embodiment]

Referring to FIGS. 1-19, a wristband-type music reproducing device 100 as a first embodiment of the inventive body wearable-type music reproducing device and a music reproducing system 1000 which comprises the music reproducing device 100 will be described next.
FIG. 1 shows a whole wristband-type music reproducing apparatus as a first embodiment of the present invention; FIG. 2 is a substantially exploded perspective view of the music reproducing apparatus of FIG. 1 viewed from its back, showing how to set a memory card in the apparatus;

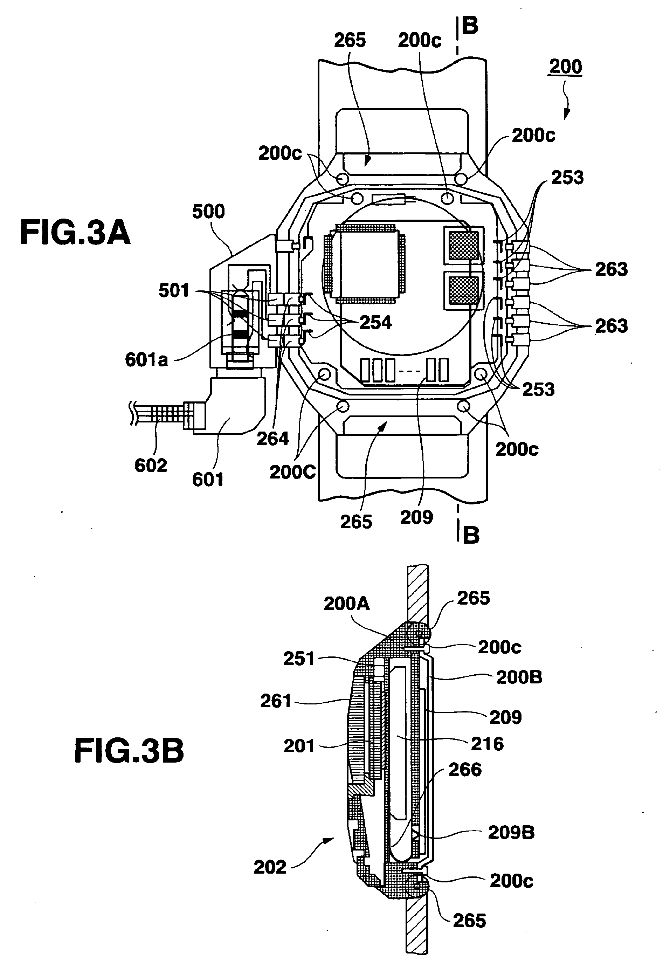

FIG. 3A is an enlarged back view of the inside of the wristband-type music reproducing apparatus of FIG. 1; FIG. 3B is a vertical cross-sectional side view of the music reproducing device taken along a line B-B' of FIG. 3A; FIG. 4 is a block diagram of a music reproducing system 1000 which comprises a wristband-type music reproducing device 100 and an external device 800 connected to the reproducing device 100;

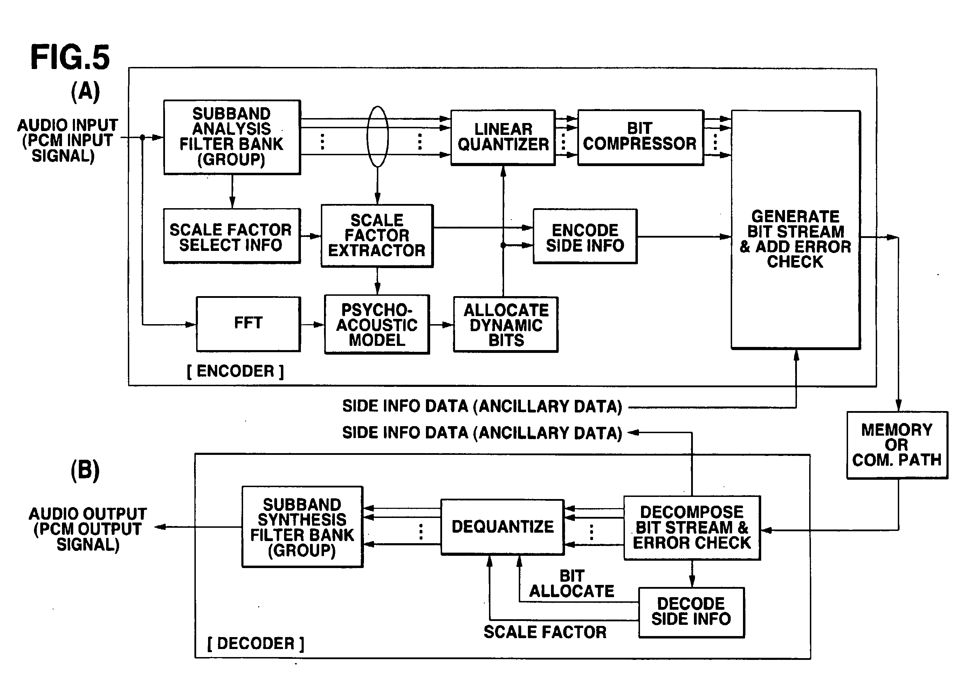

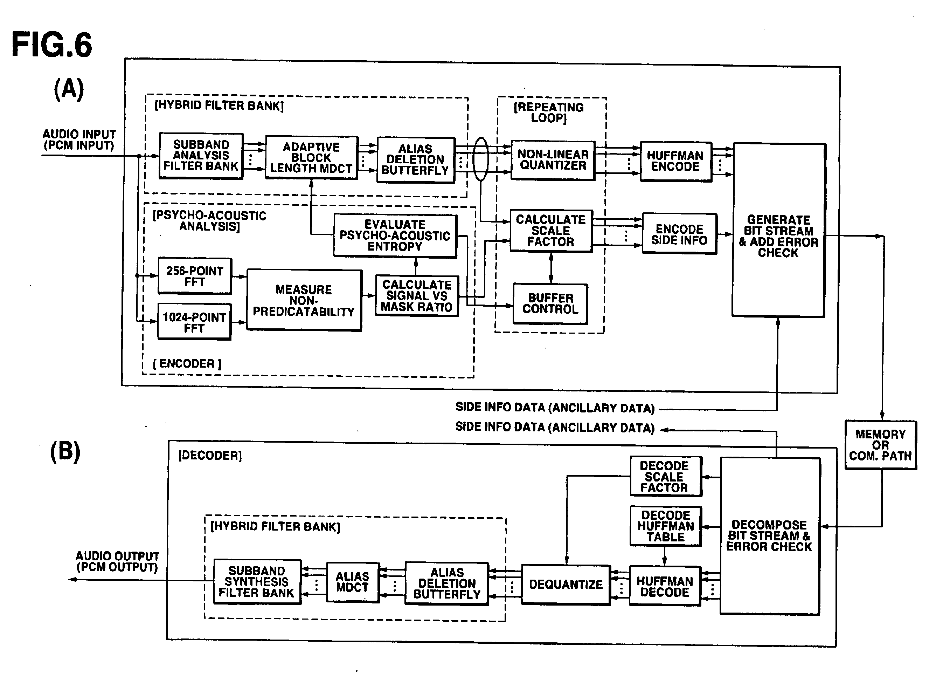

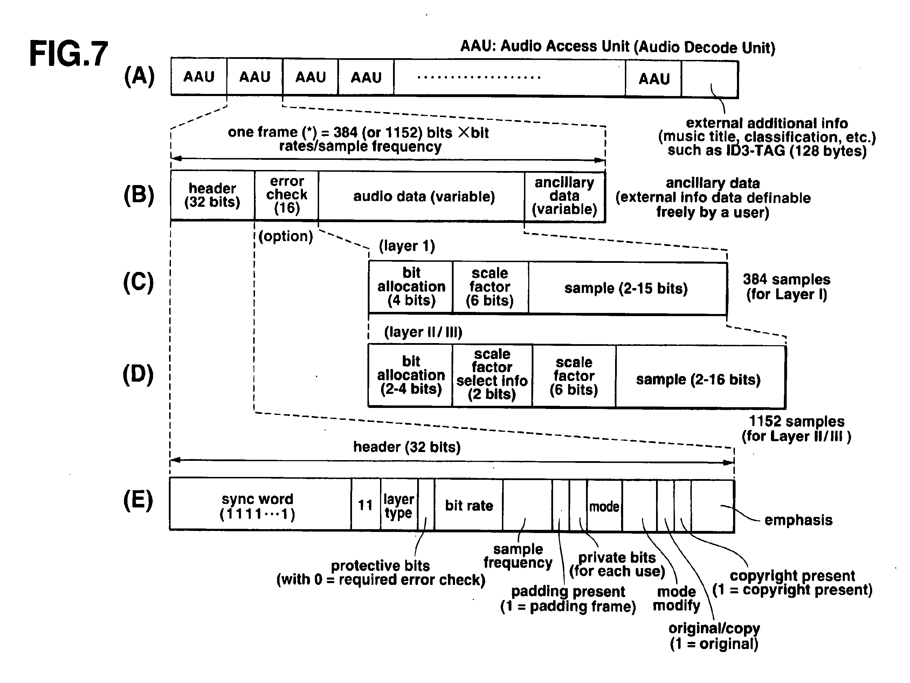

FIG. 5 is a block diagram of an encoder and a decoder of an MPEG audio (layer I or II); FIG. 6 is a block diagram of an encoder and a decoder of an MPEG audio (layer III); FIG. 7 illustrates a composition of a bit stream of MPEG audio data;

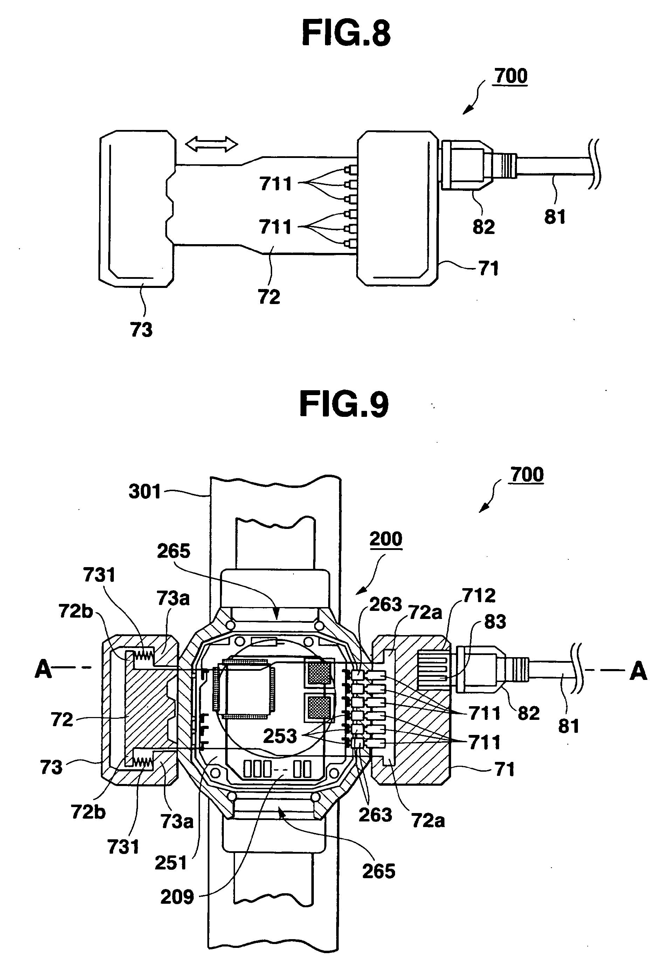

FIG. 8 is a substantial plan view of an external device adapter 700; FIG. 9 is a plan view of a combination of the wristband-type music reproducing device 200 and the external device adapter 700 where the internal structure of the adapter 700 is shown;

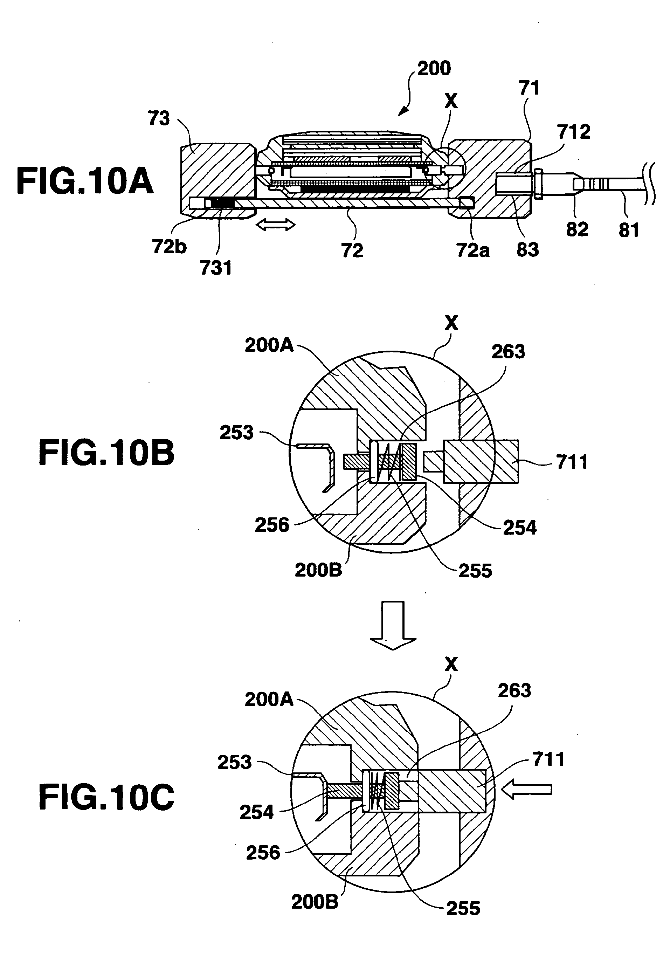

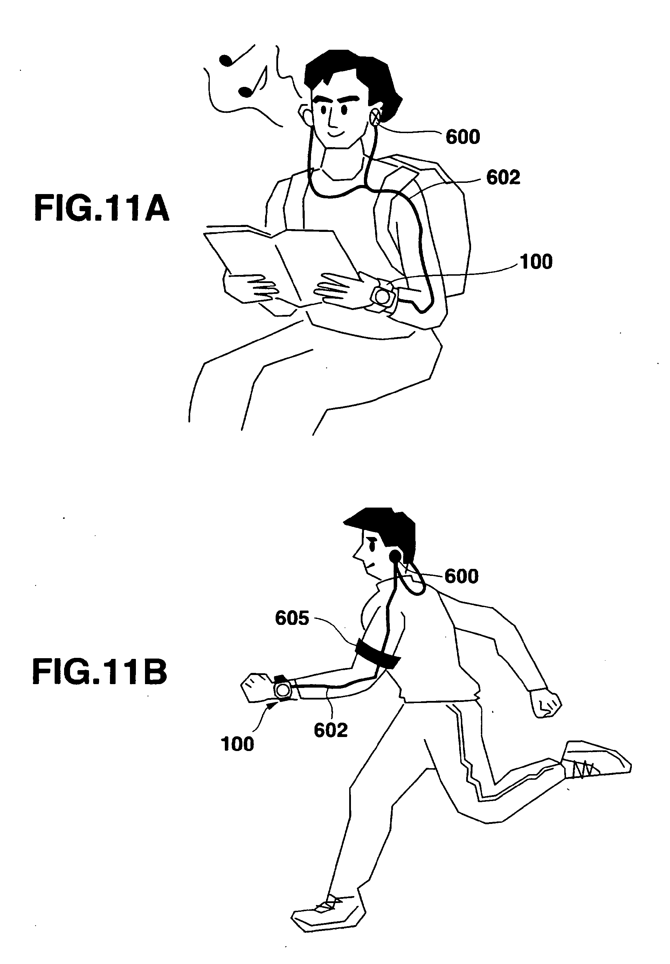

FIG. 10A is a cross-sectional view taken along a line A-A' of FIG. 9; FIGS. 10B and C each are a different enlarged view of an encircled section where the adapter 700 is connected to the reproducing device 200; and FIGS. 11A and B each show a different use of the wristband-type music reproducing device 100 worn on the user.

### Structure:

FIG. 1 is a plan view of the wristband-type music reproducing device 100, showing an outline of its composition. In FIG. 1, reference numeral 200 denotes a body; 201 a display unit; 202 an input unit; 203 a mode switch; 205 a connector to which an external device is connected; 206 a connector to which earphones are connected; 301, 302 a pair of wristbands; and 401, 402 a pair of buckles. Reference numeral 500 denotes an earphone adapter to be connected to the music reproducing device 100; 501 adapter pins; and 502 an earphone jack. Reference numeral 600 denotes earphones (a music hearing unit) to be connected to the wristband-type music reproducing device 100 through the earphone adapter 500; 601 a base; 601a a plug; 602 an earphone cord; and 603 an earphone speaker.

In the present embodiment as shown in FIG. 1, the wristband-type music reproducing device 100 comprises the body 200, the pair of bands (hereinafter referred to as a pair of wristbands 301, 302) used to wear the device body 200 on a user's body (for example, the user's wrist or upper arm), and the pair of buckles 401 and 402 which connect the corresponding pair of wristbands 301 and 302 disconnectably.

In more detail, a pair of band connecting sections 265 are each provided at a respective one of upper and lower edges of the body 200. The pair of band connecting sections 265 may be provided at opposite edges of the body 200 different from its upper and lower edges to connect the corresponding pair of wristbands 301 and 302, which are connected at one end to the corresponding pair of buckles 401 and 402.

Provided on an upper surface of the body 200 are the display unit 201, input unit 202 and mode switches 203, which are operated to set an operational mode.

The display unit 201 comprises a display screen of a liquid crystal display panel. In a timepiece mode in which the wristband-type music reproducing device 100 operates as a timepiece based on display data inputted from a control unit 210 (which will be described later), the display unit 201 displays timepiece information such as a date, a day of the week and a present time. In a music mode in which the reproducing device 100 reproduces music data, the display unit 201 displays information for music reproduction such as a title of music, a singer's name, a performance time, song words and/or a number given to the music data. In a communication mode, the display unit 201 displays a message that the music reproducing device 100 is in communication with an external device 800 or music related information corresponding to music data under downloading. The display unit 201 is protected by a transparent shield 261 (FIG. 3B).

The input unit 202 comprises keys which are operated to input instructions about timepiece functions such as correction to the time in the timepiece mode, instructions about music reproduction such as reproduction, stop, rewind or fast feed of music in the music mode, and instructions about data communication to start communication with the external device 800 in the communication mode. Thus, when one of the keys is depressed, the input unit 202 provides a corresponding depressed key signal to the control unit 210.

The mode switches 203 are used to set a respective one of the timepiece, music and communication modes. The mode switches 203 may be replaced with a switch which displays a mode select menu on the display unit 201. When a selected one(s) of the mode switches 203 is depressed, it delivers a corresponding signal to the control unit 210. Upon receiving the signal, the control unit 210 performs a corresponding process.

The body 200 has the external device and earphone connectors 205 and 206 provided on its opposite sides thereof.

The external device connector 205 has input terminals 501, which receive data from the external device 800 (for example, a PC (Personal Computer)). The data (compressed encoded music data) is written by a read/write control unit 214 to the memory card 209 received in the memory card receiver 209A provided on the body 200.

The earphone connector 206 comprises an output terminal to which the earphone adapter 500 is connected. Music data is output from the music data decoder 211 and output 211 (to be described later) via the earphone connector 206 and the earphone adapter 500 to the earphones 600.

The pair of wristbands 301 and 302 connected to the device body 200 are deformable so as to be wound around the user's body (wrist or upper arm) and then to engage the buckles 401 and 402 mutually to wear the device body 200 on the user's body.

The pair of buckles 401 and 402 provided at respective relevant ends of the wristbands 301 and 302 compose a connecting mechanism of FIG. 1 which allows the pair of buckles 401 and 402 to be engaged in a simple operation to rapidly and removably wear the wristband-type music reproducing device 100 on the user's body.

One buckle 402 comprises a hollow body 402a having a front opening 402b and its right and left openings 402c. The other buckle 401 insertable into the opening 402b of the buckle 401 comprises a central support tongue 401a and a pair of auxiliary flexible supports 401b each provided on a respective side of the tongue 401a. When the buckles 402 and 401 are to be engaged with each other, the pair of auxiliary flexible supports 401b are somewhat pressed inward laterally and inserted sufficiently along with the central tongue 401a into the opening 402b in the buckle 402 and then released. Then, the inward compressed pair of flexible supports 401b are outward laterally expanded to be engaged in the respective right and left openings 402c such that the pair of flexible supports 401b each appear outward laterally out of a respective one of the pair of openings 402c.

When the buckle 401 is to be removed from the buckle 402, the first and second flexible supports 401b of the buckle 401 are pressed inward laterally with fingers of the user's hand, they are removed from the right and left openings 402c. Then, the buckle 401 is pulled out lengthwise from the buckle 402.

The earphone adapter 500 is used to connect the earphones 600 to the wristband-type music reproducing device 100 such that a music signal produced in the reproducing device 100 is delivered to the earphones 600, which then output a corresponding music sound. The adapter 500 has a substantially box-like body which has the jack 502 into which the plug 601a of the earphones 600 is inserted, the connection pins 501 which are connected to the terminals of the earphone connector 206 in the reproducing device 100, and an internal circuit which connects the plug 601a to the connection pins 501.

By connecting the device body 200 and the earphones 600 through the adapter 500, an increase in the size of the body 200 which would otherwise be required is avoided. Commercially available earphones of general standards may be connected to the adapter 500.

The earphones 600 comprises the base 601 integral with the plug 601a, the pair of earphone speakers 603, and a cord 602 which connects the plug 601a and the pair of earphone speakers 603 through the base 601. The earphones 600 are generally the ones used for listening to music and having speakers 603 in a form suitable for being worn on the user's ears. A music signal produced by the reproducing device 100 is delivered through the adapter pins 501, the plug 601a and the cord 602 to the speakers 603, which then output corresponding musical sounds.

The structure of the device body 200 will be described next. FIG. 2 is a substantial exploded perspective view of a card receiver provided on a back of the body 200. In FIG. 2, reference numeral 200 denotes the body, 200A a case, 200B a back cover, 200C a screw, 200D a waterproof packing, 206 the earphone connector, 209 the memory card, 209A the card receiver, 209B connection terminals, and 209C card terminals.

As shown in FIG. 2, in the first embodiment, the memory card 209 is set within the card receiver 209A open on the back of the case 200A. The back cover 200B is then removably fixed with four screws 200C through the waterproof packing 200D disposed so as to surround the opening in the receiver 209A.

As shown, the memory card 209 takes substantially the form of a square whose one corner is chamfered, and the plurality of connecting terminals 209C arranged along a shorter side thereof involved in the chamfered corner of the memory card 209.

The case 200A comprises the memory card receiver 209A having an inner shape corresponding to an outer shape of the memory card 209. The card receiver 209A has therein a plurality of connection terminals 209B to be connected to the terminals 209C on the memory card 209.

The back cover 200B is fixed with the four screws 200C to the card receiver 200A so as to cover the opening of the card receiver 209A on the back of the case 200A. The waterproof packing 200D is disposed so as to surround an outer periphery of the opening in the card receiver 209A and has a size somewhat smaller than the outer size of the back cover 200B.

As described above, the back cover 200B is fixed with the screws 200C at its periphery through the waterproof packing 200D to the back of the case 200A so as to cover the card receiver 209A with the memory card 209 being set therein. Thus, by removing the back cover 200B, the memory card can be changed with another card for replacing data or increasing the memory capacity. In addition, the memory card 209 is protected by the waterproof packing 200D from moisture.

FIG. 3A is a plan view of the body 200 of the wristband-type music reproducing device 100, showing its detailed internal structure. FIG. 3B is a cross-sectional view taken along a line B-B' of FIG. 3A. In FIGS. 3A and B, reference numeral 209 denotes the memory card; 251 a circuit board; 252, 253 respective board terminals; 261 a transparent shield; 200C respective screws; 263 and 264 pin insertion holes; 265 a band attaching section; 200B the back cover; 266 a flexible cable; and 209B the connection terminal.

As shown in FIGS. 3A and B, the pair of band attaching sections 265 are each provided at a respective one of upper and lower edges of the body 200. The pair of wristbands 301 and 302 are each attached at one end to a respective one of the pair of band attaching sections 265. The body 200 comprises a case taking the form of a wristwatch case, which includes the case 200A and the back cover 200B between which the circuit board 251 and the memory card 209 are received.

As shown in FIG. 3B, the circuit board 251 is disposed behind the display unit 201 covered with the shield 261 within the body 200. A rechargeable battery 216 is further disposed behind the circuit board 251. The memory card 209 is placed behind the battery 216 within the body 200. The body 200 and the respective elements concerned are fixed with the screws 200C together with the back cover 200B.

Provided on the circuit board 251 are various devices and terminals that compose an inner circuit of the reproducing device 100 and which are connected to the rechargeable battery 216 so as to receive power from the battery. The circuit board 251 is connected by a flexible cable 266 through the connecting terminals 209B to the memory card 209 such that the devices provided on the circuit board 251 may read and process data stored on the memory card 209.

The rechargeable battery 216 is a secondary cell such as a lithium ion cell or a cell using a hydrogen occluding metal which feeds power to the various devices on the circuit board 251 and to the music reproducing device 100.

As shown in FIG. 3A, the earphone connector 206 of the body 200 has pin insertion holes 264 into which pins 501 of the earphone adapter 500 are inserted, and board terminals 252 provided on the circuit board 251 so as to align with the pin insertion holes 264.

When the adapter pins 501 are inserted into the pin holes 264, the pins 501 are connected to the board terminals 252. The earphone adapter 500 comprises a circuit (not shown) by which the plug 601a inserted into the jack 502 is connected electrically to the connection pins 501. Thus, a music signal outputted from a device on the circuit board 251 is delivered to the earphones 600.

The external device connector 205 of the body 200 has a plurality of pin insertion holes 263 provided on a side of the body 200 and a corresponding plurality of board terminals 253 provided on the circuit board 251 so as to align with the plurality of pin insertion holes 263. Inserted into the pin holes 263 are the respective pins 711 of the adapter 700 (FIG. 8) such that the board terminals 253 are electrically connected to the corresponding pins 711. The board terminals 253 and pin insertion holes 263 are the same in number as the pins 711 of the adapter 700.

Referring to FIG 4, the circuit compositions of the wristband-type music reproducing device 100, external device 800 which has stored encoded music data, and a music reproducing system 1000 as the first embodiment which comprises the reproducing device 100 and the external device 800 will be described next.

The wristband-type music reproducing device 100 comprises the display unit 201, input unit 202 which includes mode switches 203, a timepiece 207, an oscillator 208, a control unit 210, a music data decoder 211, a music output unit 212, a RAM having a music data memory area 213, a read/write control unit 214, an external interface 215 and the rechargeable battery 216, and a power supply control 217 with a removable memory card 209.

An external device adapter 700 is connected removably to the connector 205 provided on the body 200, and the earphone adapter 500 is connected removably to the earphone connector 206.

The control unit 210 controls in a centralizing manner the respective components of the wristband-type music reproducing device 100 to perform operation corresponding to a timepiece mode, a music mode or a communication mode selected by a key-in signal provided by the mode switches 203.

In the timepiece mode, the control unit 210 displays on the display unit 201 a date/time based on time data measured and provided by the timepiece 207, performs a timepiece function such as correction to the time in accordance with an instruction inputted at the input unit 202, and displays a result of the processing on the display unit 201.

In the music mode, the control unit 210 reads the compressed encoded music data stored on the memory card 209 set in the card receiver 209A in accordance with an instruction of reproduction inputted at the input unit 202, stores it in the music data memory 213, and reproduces corresponding music. In this case, the control unit 210 decodes in the music data decoder 211 the music data stored in the music data memory 213. Then, in the music output unit 212, the control unit 210 performs D/A conversion on the decoded digital music data and delivers a resulting signal to the earphones 600 via the earphone adapter 500. The control unit 210 displays on the display unit 201 data on the music (its title, a singer's name, song words, performance time, music category, which are hereinafter referred to as "music related data") under reproduction.

In the communication mode, the control unit 210 receives the compressed encoded music data and the music related data from the external device 800 via the adapter 700. The read/write control unit 214 writes the received music data and music related data to the memory card 209.

The timepiece 207 sequentially measures date/time data, sends the measured data to a time register (not shown) for updating purposes. The timepiece 207 comprises the oscillator 208 which generates an electric signal of a predetermined frequency and a frequency divider (not shown) which provides a signal of a different predetermined frequency so as to count the signals to provide a present time.

The music data decoder 211 decodes the music data compressed and encoded at an appropriate bit rate in a predetermined method so as to provide a high quality tone and efficient transmission. In this case, for example, an encoding method comprising an entropy encoding method using an acoustic characteristic of an MP3 (MPEG1 Audio Layer **III**) or a perceptual encoding system may be used.

The decoder 211 performs a decoding process corresponding to such encoding method. More particularly, the control unit 201 decomposes the compressed encoded music data (bit stream) received from the music data memory 213 or memory card 209 into frames of an AAU (Audio Access Unit) in a frame decomposition unit 211a; and extracts side information such as a frame header, bit allocation information and a scale factor from a respective frame, and dequantizes the frame audio data in a dequantizer/encoder 211b based on the extracted scale factor and bit allocation information. Then, the control unit 210 synthesizes a subband from the dequantized data, separates the subband signal into right and left subband signals in a demapper 211c and delivers the signals as corresponding PCM (Pulse Code Modulation) output signals to the music output unit 212.

A process for decoding the MPEG audio data will be described next with reference to FIGS. 5 and 6 which show MPEG audio layer I or II and III decoders denoted by (B), respectively.

The MPEG audio layer I or II decoder (B) decomposes an encoded bit stream to frames in a decoding unit of AAU, checks errors, and then decodes the frames one at a time. First, the decoder B extracts side information such as a frame header, bit allocation information and a scale factor, and then dequantizes the audio data based on the extracted scale factor and bit allocation information. Then, the decoder synthesizes a subband and outputs it as a PCM output signal.

In addition to a process similar to the layer I or II decoding process, the MPEG audio layer III decoder (B) of FIG. 6 decodes an encoded Huffman table, and Huffman decodes the bit stream based on the decoded Huffman table. The decoder (B) then decodes the scale factor, and dequantizes the audio data based on the decoded scale factor. The decoder (B) then performs a de-MDCT and subband synthesis, and then outputs a corresponding PCM signal.

The music output unit 212 converts the input digital music data to analog music signals in a pair of D/A converters 212a, eliminates high-frequency components in a pair of LPFs (Low Pass Filters) 212b, and delivers resulting data to the earphones 600 through the adapter 500.

The RAM (music data memory) 213 comprises a semiconductor music data memory which stores decoded reproduced music data and related information. It has also stored programs for operation of the wristband-type music reproducing device 100 and stores data obtained as results of various processes.

The memory card comprises a small non-volatile semiconductor storage medium such as a flash memory set removably in the wristband-type music reproducing device 100. The memory card 209 stores a plurality of music data received from the external device 800 (for example, PC), and information related to the music data. The music related data comprises externally additional or side information such as a title of music, song words, singer's name, and a performance time for the music, incidental to the music. It corresponds to ID3-TAG of FIG. 7 and ancillary data. The memory card 209 is small and light and resists shocks/vibrations to thereby further improve the convenience of the wristband-type music reproducing device 100.

The read/write control unit 214 controls writing data received from the external device 800 in a predetermined area (RAM 213 or the memory card 209). Also, in response to reproduction of music, the read/write control unit 214 reads music data to be reproduced from among the music data stored on the memory card 209 and writes it to the music data memory 213.

The external interface 215 acquires therethrough music data transmitted from the external device 800 via the adapter 700 and transmits therethrough the music data to the read/write control unit 214.

The power supply control unit 217 converts power from the rechargeable battery 216 to predetermined different voltages, which are then fed to the respective devices, and controls a power supply voltage charged to the battery 216 via a charger 702 of the external device adapter 700 from the external device 800.

The adapter 700 comprises means for transmitting therethrough the compressed encoded music data from the external device 800 and is composed for a serial or parallel cable. The adapter 700 comprises an interface converter 701 which converts music data received from the external device 800 to data corresponding to the reproducing device 100, and the charger 702 which supplies power to the battery 216 contained in the music reproducing device 100.

The adapter 700 is connected removably to the reproducing device 100. The interface converter 701 interface converts the encoded music data received from the external device 800 and then delivers the resulting data to the music reproducing device 100. The charger 702 supplies power received from the external device 800 to the battery 216 of the reproducing device 100 for a charging purpose.

The structure of the external device adapter 700 connected to the wristband-type music reproducing device 100 will be described next. FIG. 8 is a plan view of the adapter 700, showing its composition substantially. In FIG. 8, reference numeral 71 denotes a fixed block, 72 a slide plate, 73 a movable block, 711 a respective one of pins, 81 a cable, and 82 a cable connector.

As shown in FIG. 8, the adapter 700 has the fixed and movable block 71 and 73 provided at the respective ends of the slide plate 72.

The fixed and movable blocks 71 and 73 each take substantially the form of a rectangular parallelepiped. The fixed block 71 is fixed to slide plate 72 so as not to move relative to the same. The movable block 73 is attached to the slide plate 72 so as to be movable lengthwise relative to the same. The movable block 73 has a hollow therein, as will be described later in more detail.

A cable connector 82 connected to an end of the cable 81 is connected to the opposite side of the fixed block 71 from the slide plate 72. A plurality of pins 711 extending from the slide plate side of the fixed block 71 are connected to the cable connector 82 through an internal circuit of the adapter 700 of FIG. 4.

FIG. 9 is a plan view of the music reproducing device 100 and the adapter 700 attached thereto, showing an internal structure of the adapter 700. In FIG. 9, reference numerals 72a and 72b each denote a flange, 712 a connector receptacle, 73a an opening defining wall, 731 a coil-like return spring, and 83 a cable terminal.

FIG. 10A is a cross-sectional view taken along a line A-A' of FIG. 9. FIGS. 10B and C are each a different enlarged view of a section, encircled by X, where the music reproducing device 100 is connected to the adapter 700. In FIGS. 10B and C, reference numerals 254, 255 and 256 denote a connection pin, a return spring and a waterproof ring, respectively.

As best shown in FIG. 9, the slide plate 72 has the flange 72a at its fixed-block side end, and a flange 72b at its movable block-side end. The flanges 72a and 72b each protrude widthwise outward at the respective ends of the slide plate 72. The slide plate 72 is fixed at its flange 72a within the fixed-block 71, and received slidably at its other flange 72b within the hollow in the movable block 73 through an opening of the hollow.

The opening of the hollow in the movable block 73 has substantially the same width as the slide plate 72. The hollow is larger in width than the flange 72b. Thus, the inner space of the hollow has an enlarged space continuous to the opening. Thus, the wall of the movable block 73 which defines the opening has a peripheral inner surface 73a which faces the flange 726 of the slide plate 72.

The pair of return springs 731 are provided between the flange and the corresponding peripheral inner surface 73a of the opening defining wall of the movable block 73 such that the pair of return springs 731 act so as to move the flange 72b of the slide plate 72 by its resiliency away from the peripheral inner surface 73a of the opening defining wall. Thus, the movable block 73 is biased by the resiliency of the return springs 731 so as to move toward the fixed block 71.

When a force exceeding a predetermined force is applied to the return springs 731 against their resiliency, the movable block 73 is moved away from the fixed block 71. When this force is released, the movable block 73 moves back toward the fixed block 71.

The fixed block 71 has a receptacle 712 into which the cable terminals 83 of the cable connector 82 are inserted. By electrically connecting the terminals of the receptacle 712 and the cable terminals 83, the pins 711 are connected to the cable terminals 83 via the inner circuit of the adapter 700 of FIG. 4.

When the adapter 700 is set or connected to the music reproducing device 100, as shown in FIG. 9, the body 200 of the music reproducing device 100 is held between the fixed and movable blocks 71 and 73. In this state, the pins 711 of the fixed block 71 are inserted into the corresponding holes 263 in the body 200.

As described above, the movable block 73 is always biased so as to move toward the fixed block 71. When a force is applied to the movable block 73 so as to move away from the fixed block 71 and the body 200 is placed between the fixed and movable blocks 71 and 73 on the slide plate 72 and then the force is released from the movable block 73, the movable block 73 is moved toward the fixed block 71 by the resiliency of the return springs 731 to thereby hold the body 200 between the fixed and movable blocks 71 and 73. The body 200 set in the adapter 700 is pressed to the fixed block 71 by the resiliency of the return springs 731. In addition, the pins 711 are inserted into the corresponding holes 263 so as not to slip off the holes 263 easily.

The structure of the connection mechanism, encircled as X in FIG. 10A, in which the pins 711 of the adapter 700 are connected to the pin holes 263 in the body 200 will be described next.

FIG. 10B illustrates that the body 200 is spaced from the fixed block 71 in the connection mechanism X. In the connection mechanism X, a connection pin 254, a return spring 255 and a waterproof ring 256 are disposed in a pin hole 263 provided in the body 200. It is to be noted that there are a plurality of pins 254, a plurality of return springs 255, and a plurality of waterproof packing 256 disposed in a plurality of pin holes 263 provided in corresponding relationship in the body 200.

The pin insertion hole 263 is composed of a larger-diameter hole open to the outside and a smaller-diameter hole communicating between the larger-diameter hole and the inner hollow space within the body 200. The connection pin 254 is inserted into the corresponding pin insertion hole 263 from the outside of the body 200. The connection pin 254 has a disk-like head and a stem integral with the head with the head and the stem being positioned in the larger- and smaller-diameter hole portions, respectively, with the stem extending through the smaller-diameter hole into the body 200.

The connection pin 254 extends at its stem through the waterproof ring 256. The ring 256 is made of a flexible material such as rubber or a resin. The spring 255 is disposed between the head of the pin 254 and the waterproof ring 256.

The stem of the connection pin 254 inserted into the hole 263 from the outside of the body 200 extends into the body 200 through the spring 255 and ring 256 such that the connection pin 254 is biased at its head by the spring 255 outward from the body 200.

The connection pin 254 extends close to a corresponding board terminal 253 within the body 200. When the connection pin 254 moves against the resiliency of the spring 255 into the body 200, the connection pin 254 comes into contact with the corresponding board terminal 253 to establish electric connection therebetween.

As will be clear from the description of the connection mechanism X, when the adapter 700 is attached to the wristband-type music reproducing device 100, the pins 711 are inserted into corresponding insertion holes 263, respectively, as shown in FIG. 10C. In that case, each connection pin 254 is pressed at its head by the corresponding pin 711 so as to move into the body 200.

When the connection pin 254 comes into contact with the corresponding board terminal 253 in the body 200, the pin 711 is placed in electrically contact with the board terminal 253. Thus, the circuit provided in the body 200 is electrically connected to the cable 81 (FIG. 10A) which is connected to the adapter 700. The connection pin 254 is movable at its stem within the insertion hole 263, so that a gap may be produced between the connection pin 254 and the corresponding insertion hole 263. In that case, however, the waterproof ring 256 prevents invasion of moisture and/or soil into the body 200.

While the connection mechanism involving each pin and its insertion hole 263 has been illustrated, a similar connection mechanism may be used for each pin and its insertion hole 264 provided in the earphone connector 206 of the body 200.

Next, the external device 800 will be described. As shown in FIG. 4, the external device 800 comprises, for example, a personal computer which in turn, comprises a storage device 803 for storing a plurality of encoded music data, and a network connecting function (communicating means) which comprises a modem 809 and a LAN interface 808. In more detail, the external device 800 comprises a control unit 801, a voice data encoder 802, a memory device such as a hard disk (hereinafter referred to as a storage device 803), a voice input unit 804, a CD drive 805, a keyboard 806, a display monitor 807, the LAN interface 808, the modem 809, and an external interface 825, which are connected through buses.

In the external device 800, the control unit 801 reads from the CD drive 805 music data stored in a storage medium such as a CD or a CD-ROM, and delivers the music data to the voice data encoder 802. The encoder 802 encodes the music data in a predetermined encoding system and delivers resulting data to the storage device 803 for a storing purpose.

The microphone 909 receives voice and outputs corresponding analog voice data to the voice input unit 804. The voice input unit 804 encodes the voice data in a PCM system, and delivers a resulting signal through the control unit 801 to the voice data encoder 802. The voice data encoder 802 then compresses and encodes the voice data in a predetermined encoding system, and then delivers resulting data to the storage device 803 for a storing purpose.

In more detail, the voice input unit 804 delivers to an LPF 804b the analog voice data received from the microphone 909. The LPF 804b filters out high frequency components from the received analog signal, and then delivers a resulting signal to an A/D converter 804c. The A/D converter 804c samples the analog signal at a predetermined sample frequency, then quantizes the sampled signals, and then delivers the quantized data to a PCM encoder 804d. The encoder 804d then encodes the quantized data, and then delivers resulting PCM-encoded data to the control unit 801. The control unit 801 delivers the PCM-encoded data to the voice data encoder 802, which compresses and encodes the voice data in a predetermined encoding system, and delivers the resulting data to the storage device 803 for a storing purpose.

The external device 800 connects by dialing via the modem 809 to a public network 904 and then accesses to the Internet 900 via a corresponding one of ISPs (Internet Service Providers) 901. When the external device 800 composes a part of a LAN (Local Area Network) 907, the external device 800 accesses a music distribution service site set in a server (music distribution terminal) 902 via an ISP 901 and a router 905 to download music data encoded in the predetermined encoding system. The control unit 801 stores the downloaded encoded music data in the storage device 803.

The voice data encoder 802 compresses and encodes in the predetermined system the voice data encoded in the PCM system and provided by the microphone 909. The encoding system performed in the voice data encoder 802 may employ an MPEG audio encoding system, for example. In this system, a 16-bit linearly quantized PCM input signal is mapped in 32 frequency bands in a mapping unit 802a. In allocation of quantizing bits, a masking level for masking a quantization error based on a psychoacoustic characteristic is calculated in a psychoacoustic model unit 802b, and a mapped signal provided by the mapping unit 802a is quantized and encoded in accordance with allocated bits based on the psychoacoustic model unit 802b in a quantizing/encoding unit 802c. Thus, voice data of one frame is produced in a frame generating unit 802d, and then a bit stream of compressed encoded voice data produced thereafter is delivered to the storage device 803.

FIG. 5 (A) shows an MPEG audio layer I or II encoder A which may be used as the voice data encoder 802 of FIG. 4. FIG. 6 (A) shows an MPEG audio layer III encoder, which may also be used as the music data encoder 802.

In the MPEG audio layer I encoder of FIG. 5 (A), a PCM input signal is divided into 32 frequency bands. Those input signals are subjected to a FFT (Fast Fourier Transfer) in parallel at 512 points. A masking curve is calculated, using an auditory masking characteristic. Signals in each divided subband are requantized and compressed in a range of a lowest masking level to a highest signal level in the subband. Side information such as a frame header and bit allocation information are added to the compressed signals in the subband and output as a bit stream.

While the MPEG audio layer II employs a subband encoding system basically identical to that of the MPEG audio layer I, the former employs a changed basic processing unit to reduce a quantity of side information such as bit allocation information and a scale factor indicative of each subband level to reduce the bit rate and to perform FFT at 1024 points to obtain a detailed masking curve to thereby ensure a sound quality.

The MPEG audio layer III encoder comprises a combination of the subband encoding system and the transform encoding system of the layer I or II encoder. As shown in FIG. 6 (A), the MPEG audio layer III encoder separates an input signal into 32 frequency subbands, performs MDCTC (Modified Discrete Cosine Transform), non-linear quantization, and Huffman coding on the respective relevant data in order to reduce block distortions, improves a frequency resolution, and reduces redundancy of the data.

A bit stream of MPEG audio data has a composition of FIG. 7. As shown in FIG. 7 (A), the bit stream of MPEG audio data is composed of frames of an AAU (Audio Access Unit) and an ID3-TAG (externally added, or side, information such as a title of music, category, etc). As shown in FIG. 7 (B), each AAU comprises a header, error check data, and audio data of a variable length to be used to reproduce an audio signal. When the audio data falls short of the end of AAU, data other than the MPEG audio data called ancillary data which corresponds to the difference in length between the audio data and the AAU may be added to the end of the audio data.

As shown in FIG. 7 (C) , the layer I audio data is composed of a bit allocation, a scale factor and a sample. As shown in FIG. 7 (D), the layer II audio data is composed of a bit allocation, scale factor select information, a scale factor and a sample.

The header of AAU is basically common to the layers I, II and III. As shown in FIG. 7 (E), the header is composed of a sync word whose figures are all "1" at all times for use in synchronization, an ID, a layer classification, a protection bit indicative of the presence of error check, bit rate specify data, a sample frequency, the presence of padding, a private bit as an individual use bit, a mode, a mode modification, original/copy, the presence of copyright, and an emphasis bit.

The LAN (Local Area Network) interface 808 and modem 809 of the external device 800 are constituted as communication means to download music data, for example, from a music distribution service site set in the server 902, for example, of the Internet 900. The LAN interface 808 is used to compose a LAN which comprises the external device 800, server 906 and other personal computers. In order to communicate via the network (telephone lines) with another external device, the modem 809 modulates digital data processed by the control unit 801 to provide an analog signal suitable for the frequency band of the telephone lines, and demodulates the analog signal received via the telephone lines to provide a digital signal.

An external interface 825 is used to send therethrough compressed encoded voice data stored in the storage device 803 of the external device 800 to the external wristband-type music reproducing device 100. The external interface 825 is connected to an external device adapter 700 via the serial or parallel cable 81. Music data received from the external device 800 is subjected to interface conversion in the external device adapter 700. A resulting signal is then inputted to the music reproducing device 100 and recorded on the memory card 209.

In operation, it is assumed that the wristband-type music reproducing device 100 is worn on the user's wrist or upper arm by the pair of wristbands 301 and 302 with the pair of buckles 401 and 402 being engaged, that compressed encoded music data is stored on the memory card 209, and that the headphones 600 is worn on the user's ears.

When the user sets the music mode with the mode switches 203 provided on the wristband-type music reproducing device 100, its control unit 210 displays on the display unit 201 music reproduction information set in a first piece of music such as its title "TRK-1" and a performance time "01'10'' ''. Then, when the user manipulates the input unit 202 for music reproduction, the control unit 210 reads the piece of music corresponding to the "TRK-1" from the music data stored on the memory card 209 and stores it in the RAM 213 for reproduction of the music.

The control unit 210 decodes the encoded music data in the music data decoder 211 and then sends resulting data to the music output unit 212. Simultaneously, it sequentially sends the control unit 210 data on the externally added information (music related data) extracted when the music data is decomposed into frames in the music data decoder 211. The control unit 210 displays the music related data on the display unit 201.

The music output unit 212 D/A converts the decoded digital music data in the pair of D/A converters 212a, filters out high frequency components in the pair of LPFs, and delivers resulting analog music data via the adapter 500 to the earphones 600. The earphones 600 outputs the analog music data audibly from the speakers 603.

When the user manipulates the input unit 202 of the wristband-type music reproducing device 100 for fast feed- or rewind- reproduction or for stopping the reproduction, the control unit 210 reproduces the music after fast feeding or rewinding the music or stops the music accordingly, at which time the control unit 210 extracts the externally added information (music related data) from the music data decoder 211 and displays the information on the display unit 201.

When the mode switches 203 of the wristband-type music reproducing device 100 are operated to select the timepiece mode, the control unit 210 displays on the display unit 201 the time data obtained in the timepiece 207. The control unit 210 also corrects the time in response to data on time correction input from the input unit 202 and displays a time representing a result of the correction on the display unit 201.

When the mode switches 203 of the wristband-type music reproducing device 100 are operated to set the communication mode, the control unit 210 determines whether the reproducing device 100 is properly connected to the external device 800 via the adapter 700. If it is, the music reproducing device 100 receives predetermined music data and music related data from the external device 800 via the adapter 700, and writes the data to the memory card 209 under control of the read/write control unit 214.

Transmission of music data from the external device 800 to the reproducing device 100 in the music reproducing system 100 will be described next. It is assumed that the music reproducing device 100 is removed from the user's wrist and connected to the adapter 700. It is also assumed that the adapter 700 is connected to the external device 800 via the serial or parallel cable 81.

When in this state the mode switches 203 are operated to set the communication mode, the control unit 210 determines whether the control unit 210 is connected properly to the external device 800 so as to communicate properly with the same. If it is, the control unit 210 waits for data input from the external device 800. When music data is specified at the keyboard 806 of the external device 800 to deliver the music data to the music reproducing device 100, the control unit 801 reads the specified music data and corresponding music related data from the storage device 803 and delivers the data via the external interface 825 to the reproducing device 100. When the reproducing device 100 receives those data, the read/write control unit 214 writes the data to the memory card 209.

As described above, the wristband-type music reproducing device 100 of the first embodiment comprises the body 200 which comprises the music reproducing means which, in turn, comprises the music data decoder 211 and the music output unit 212 for reproducing music data stored in the voice data memory 213 and memory card 209, the pair of wristbands 301and 302 each connected at one end to a respective one of opposite edges of the body 200 for winding around the user's wrist, and the pair of buckles 401 and 402 each connected to a respective one of the other ends of the wristbands 301 and 302 for engaging the pair of wristbands 301 and 302 with each other.

Thus, the wristband-type music reproducing device 100 is freely wearable on the user's body. In this state, music reproduced by the music reproducing means included in the body 200 is output via the music hearing unit or earphones 600 so as to be heard.

FIG. 11A and B each illustrate a different use of the reproducing device 100 of the first embodiment. FIG. 11A illustrates that the user listens to music from the earphone 600 worn on the user's ears with the music reproducing device 100 worn on the user's wrist. Data (music title, singer's name, performance time, etc.) related to the music under reproduction is displayed on the display unit 201 provided on the body 200 of the reproducing device 100. Since the reproducing device 100 includes the timepiece 207, which measures time, the display 201 also displays time.

Thus, the user can instantaneously confirm the data related to the music under reproduction and time data by viewing the display unit of the music reproducing device worn on the user' s wrist, and the user' s action, for example during jogging, is not hindered.

The wristband-type music reproducing device 100 can be operated in a desired one of the timepiece and music modes set by the mode switch 201 provided on the body 200. That is, when use of the reproducing device 101 as a timepiece is desired, the earphones 600 and the adapter 500 are removed from the reproducing device 100 and the timepiece mode is set. In this case, the portability of the reproducing device 100 is improved without being hindered by the earphone cord 602. When listening to music is desired, the earphones 600 may be connected via the adapter 500 to the music reproducing device 100 and the music mode is set. By setting the timepiece mode while the user is listening to the music, the time is instantaneously displayed on the display unit 201 for a confirming purpose.

The user can easily reproduce/stop the music data or correct the time at the input unit 202 provided on the body 200 of the music reproducing device 100 which is worn on the user's body while confirming information displayed on the display unit 201.

Since the reproducing device 100 uses the removable small semiconductor memory card 209 which stores music data, the body 200 is reduced in size to thereby improve its portability. The reproducing device 100 has no driver such as a reproducing unit for a CD or MD. Thus, it resists shocks/vibrations well to thereby reproduce high quality music. Thus, as shown in FIG. 11B, the user can play sport such as jogging while listening to music from the earphones 600 with the music reproducing device 100 worn on the user's body. Also, the user's action is not hindered outdoors.

As shown in FIG. 11B, by extending the earphone cord 602 along the user's arm and fixing the earphone cord with a band 605 to the user's arm, the user can exercise safely without being hindered by the earphone cord 602. If the earphone cord 602 is folded, for example, zigzag several times and attached to the user's upper arm with any known retaining means, the user is not hindered during exercise even when the user does not use the band 605.

The music reproducing system 1000 of the first embodiment comprises the external device 800 and the wristband-type music reproducing device 100. The wristband-type music reproducing device 100 acquires via the adapter 700 compressed encoded music data stored in the external device 800 and stores the data on the memory card 209 in the communication mode. Thus, the user of the music reproducing device 100 can easily acquire desired music data.

Since the external device 800 comprises communication means which communicates with a music distribution terminal (server 902) via the network (for example, the Internet 900), it can download music data from the music distribution terminal and store it in the storage device 803. Thus, if various music data is downloaded and delivered to the wristband-type music reproducing device 100 beforehand for a storing purpose, the user can carry the reproducing device 100 anywhere and anytime to reproduce desired music based on the music data delivered from the reproducing device 100.

When encoded music data is written to the memory card 209 from the external device 800 in the reproducing device 100, and the external device 800 is connected via the adapter 700 to the reproducing device 100. After the data is written to the memory card, the adapter 700 is removed from the reproducing device 100 and the earphones 606 is connected via the earphone adapter 500 to the body 200 for music reproduction. When the music reproducing device 100 is not used for music reproduction, the adapter 500 may be removed from the music reproducing device 100 to use the music reproducing device 100 as a general wristwatch which displays time on the display unit 201. Also, the time can be corrected at the input unit. Thus, the music reproducing device 100 is freely usable in a desired form.

The present invention is not limited to the details of the embodiment, which may be changed without departing from the scope of the appended claims.

For example, while the wristband-type music reproducing device 100 of the first embodiment is illustrated as comprising the body case 200 composed of the case 200A and the back cover 200B, as shown in FIG. 2, wherein the space formed between the case 200A and the back cover 200B is used as the memory card receiver 209A, the structure of the memory card receiver 209A is not limited to this particular case.

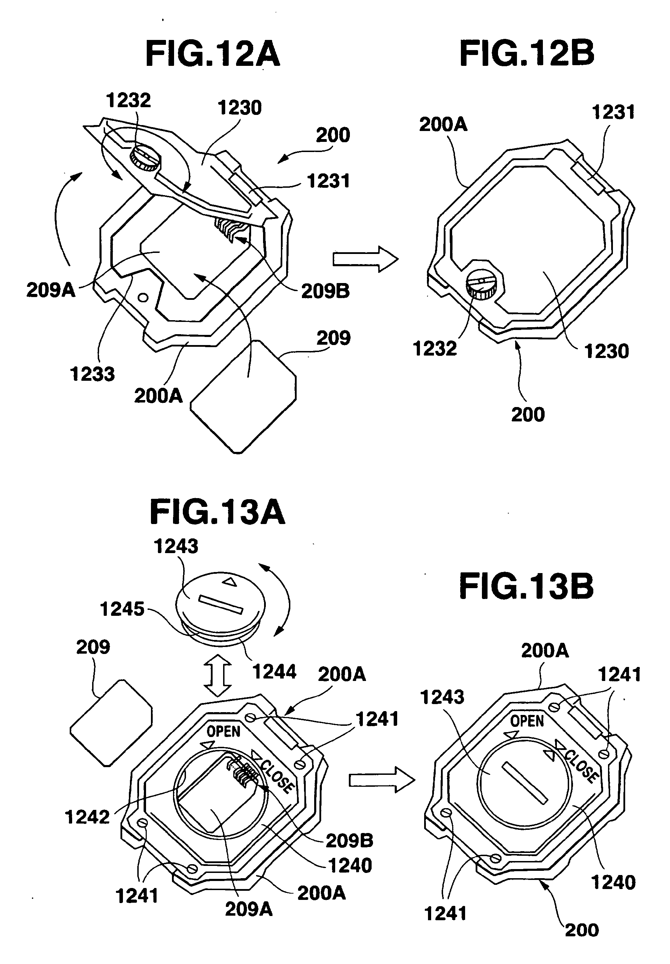

FIGS. 12A, B; 13A, B; 14A, B; 15 and 16 each show another example of the memory card receiver 209A. In FIGS. 12A and B, reference numeral 1230 denotes a back cover, 1231 a hinge, 1232 a screw (fastener) and 1233 a waterproof packing. In this example, as shown in FIG. 12A, the back cover 1230 is coupled at one edge by the hinge 1231 to a corresponding edge of the case 200A with the screw 1232 provided near a free end edge of the cover 1230. A waterproof packing 1233 is provided so as to extend around the periphery of the opening in the card receiver 209A.

In use, the memory card 209 is set in the memory card receiver 209A open on the back of the case 200A. The back cover 1230 is then closed through the hinge 1231 against the card receiver 209A. The screw 1232 is then manually tightened to fix the back cover 1230 to the case 200A, as shown in FIG. 12B. In this case, the waterproof packing 1233 fulfills a waterproof function between the cover 1230 and the card receiver 209A. The screw 1232 may be manually tightened/loosened to set/remove the memory card 209A in/out of the card receiver.

FIGS. 13A and B illustrate another example of the memory card receiver 209A. Reference numeral 1240 denotes a back cover, 1241 a screw, 1242 a tapped opening, 1243 a cover, 1244 a male screw, and 1245 a waterproof packing.

In this example, as shown in FIG. 13A, the back case 1240 is fixed with screws 1241 to the memory card receiver 209A open on the back of the case 200A and has a tapped opening 1242 below which is formed the memory card receiver 209A. The small disk-like cover 1243 having a male screw formed on its edge is adapted to mate with the tapped opening 1242. The small cover 1243 has a minus sign-like groove thereon such that a coin inserted partly at its edge into the groove may be turned to cause the cover 1243 to mate with the back cover 1240. Waterproof packing 1245 is provided so as to extend around the periphery of the male screw 1244.

In use, the memory card 209 is set in the memory card receiver 209A through the tapped opening 1242 in the back cover 1240. The smaller cover 1243 is then mated by a coin with the tapped opening 1242 in the back cover 1240 to close the opening 1242 and fix the cover 1243 to the back cover 1240, as shown in FIG. 13B. The waterproof packing 1245 placed between the back case 1240 and the small cover 1243 fulfills the waterproof function. The small cover 1243 may be removed by rotating the coin partly inserted into the groove on the smaller cover 1243 to remove or replace the memory card 209 with another.

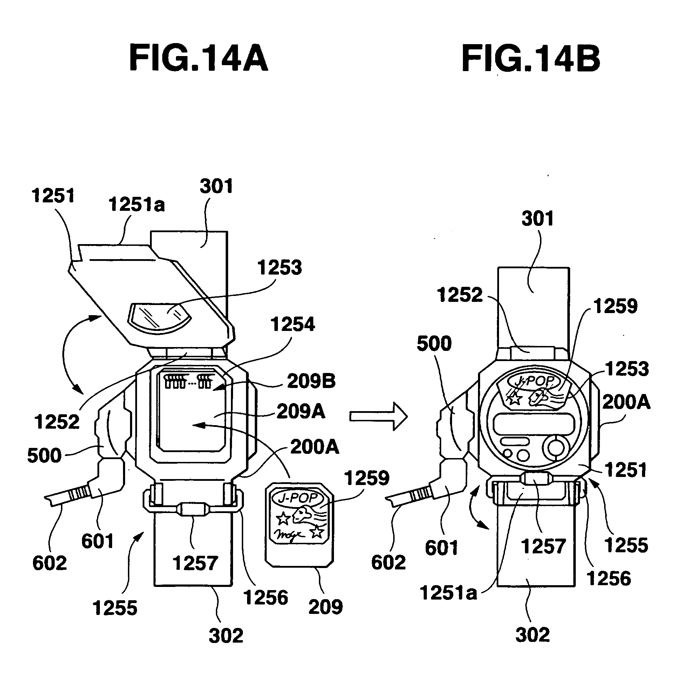

FIGS. 14A and B illustrate another example of the memory card receiver 209A. Reference numeral 1251 denotes a front cover, 1252 a hinge, 1253 a transparent window, 1254 a waterproof packing, 1255 a lock mechanism, 1256 an arm, 1257 a rubber roller and 1259 a label.

As shown in FIG. 14A, the front cover 1251 is coupled at one shorter edge by the hinge 1252 to a corresponding shorter edge of an opening in the memory card receiver 209A provided on the case 200A. The lock mechanism 1255 is provided near an opposite shorter edge of the case 200A from its former shorter edge.

The front cover 1251 has the transparent window 1253 and an extension 1251a extending outward from the opposite end of the front cover 1251 from the hinge 1252.

The lock mechanism 1255 comprises a U-like lock member 1256 attached turntable at both ends to a band attaching section of the case 200A so as to ride on the band attaching section and a rubber roller 1257 through which the lock member 1256 extend loosely and rotatably.

In use, a memory card 209, for example, with a label 1259 pasted thereon is set in the memory card receiver 209A. The front cover 1251 is turned around the hinge 1252 to close the memory card receiver 209A with the waterproof packing 1254 placed between the cover 1251 and the card receiver 209A so as to extend around the receiver opening. As shown in FIG. 14B, the U-like lock member 1256 is turned manually such that the rubber roller 1257 rides on the extension 1251a of the front cover 1251 to lock the front cover 1251 to the case 200A. In this state, the label 1259 pasted on the memory card 209 can be viewed through the transparent window 1253 of the front cover 1251. The waterproof packing 1254 fulfills the waterproof function. The manual manipulation of the U-like lock member 1256 facilitates setting and removal of the memory card 209.

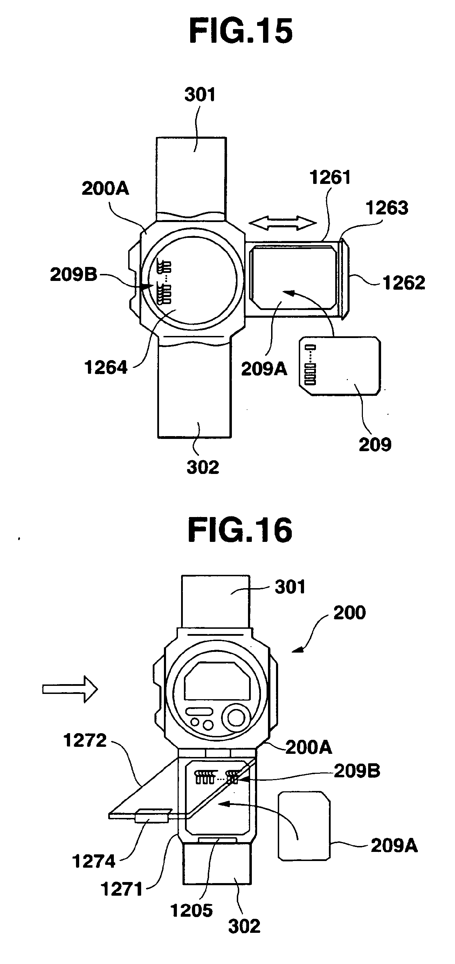

FIG. 15 illustrates a further example of the memory card receiver 209A. Reference numeral 1261 denotes a slide case, 1262 a flange, 1263 a waterproof packing and 1264 a transparent window.

As shown, the slide case 1261, which has a memory card receiver 209A, is provided within the body case 200A so as to slide into or out of the body case 200A.

The slide case 1261 has at one end a flange 1262 with waterproof packing 1263 provided between the slide case 1261 and the flange 1262. The slide case 1261 is fixable with fixing members (not shown) to the case 200A. The case 200A has the transparent window 1264 on its surface with connection terminals 209B provided therein for connection to the terminals of the memory card 209.

In use, the memory card 209 is set in the memory card receiver 209A in the slide case 1261. The slide case 1261 is then pushed into the body case 200A such that the slide case flange 1262 is brought into contact with the side of the case 200A through the waterproof packing 1263. The slide case 1261 is then fixed by the fixing members (not shown) to the case 200A. In this state, the connection terminals 209B provided within the case 209A are placed into contact with the terminals of the memory card.

The waterproof packing 1263 fulfills its waterproof function between the side of the case 200A and the flange 1262 of the slide case 1261. The fact that the slide case 1261 is slidable facilitates setting and removal of the memory card 209.

FIG. 16 illustrates a further example of the memory card receiver 209A. Reference numeral 1271 denotes a band attaching section, 1272 a transparent front cover, 1273 a hinge, 1274 a lock piece, 1275 a lock groove, and 1276 a waterproof packing.

In this example, a memory card receiver 209A with connection terminals 209B is provided in the band attaching section 1271 integral with the case 200A. The transparent cover 1272 is coupled at one edge by the hinge 1273 to a corresponding edge of the band attaching section 1271. The lock piece 1274 is provided at an opposite edge of the cover 1272 from the hinge-side of the cover 1272. The lock groove 1275 is formed in the opposite edge of the band attaching section 1271 from its hinge-side.

In use, the memory card 209 is set in the memory card receiver 209A. The cover 1272 is turned by the hinge 1273 with the waterproof cover 1277 placed around the opening in card receiver 209A so as to close the card receiver 209A. The lock piece 1274 provided at the free end of the cover 1272 is then pushed into the lock groove 1275 provided in the band attaching section 1271 to thereby lock the cover 1272 unlockably to the band attaching section 1271. The waterproof packing 1276 provided between the band attaching section 1271 and the transparent cover 1272 fulfills the waterproof function. The lock piece 1274 is easily locked or unlocked manually for setting or removing the memory card 209.

In the music reproducing system 1000 of the first embodiment, it has been illustrated that the external device 800 is connected via the adapter 700 to the wristband-type music reproducing device 100 and that the compressed encoded music data stored in the external device 800 is sent via the adapter 700 to the music reproducing device 100 and written to the memory card 209. However, the method of acquiring music data externally is not limited to this particular case.

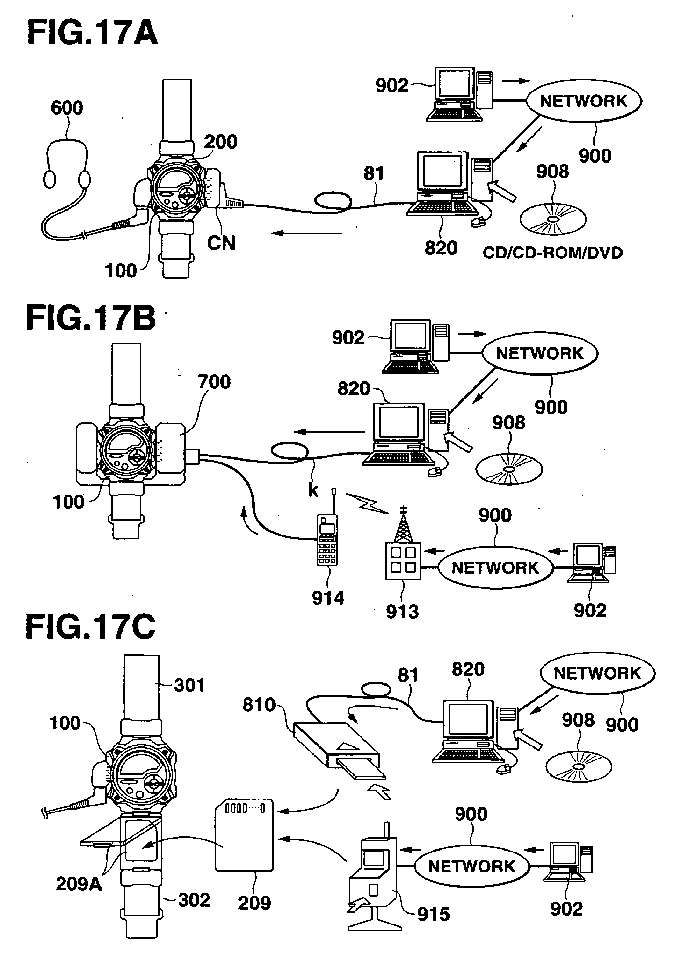

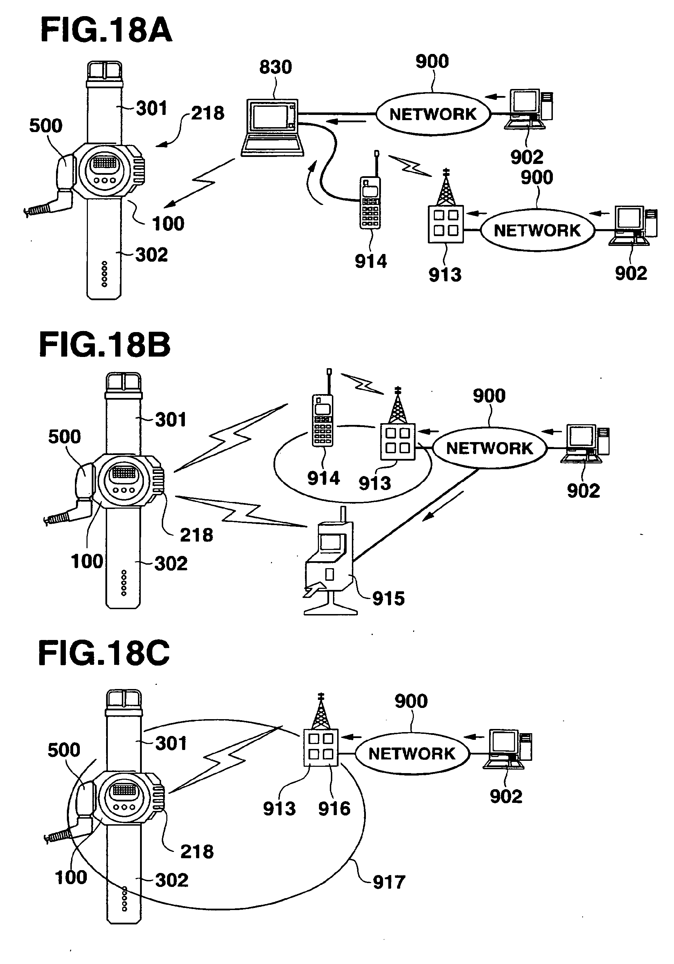

FIGS. 17A, B, C and 18A, B, C each illustrate a different method of acquiring such music data in the music reproducing system 1000.

FIG. 17A illustrates the wristband-type music reproducing device 100 of the first embodiment connected with a personal computer 820 which is, in turn, connected to the network 900.

The external device 800 including the personal computer 820 comprises the storage device 803 and a driver 805 (CD/DVD drive) which reproduces data stored in an optical disk 908 such as a CD (Compact Disk), a CD-ROM or a DVD (Digital Versatile Disk) so as to download compressed encoded music data from the server (music distribution terminal) 902 via the network 900, to store the data in the storage device 803, to read music/picture data stored in the optical disk 908 set in the driver 805, and then to output the data.

The personal computer 820 has a data communicating function of sending music data stored in the storage device 803 or output by the driver 805 to the wristband-type music reproducing device 100 in accordance with the user's instruction.

In FIG. 17A, the wristband-type music reproducing device 100 is illustrated as being connected to the personal computer 820 through a serial or parallel cable 81 and a connector CN, and has a data communicating function of sending/receiving serial or parallel data to/from the personal computer 820.

In this case, the user of the wristband-type music reproducing device 100 is able to download a desired piece of music data from a plurality of pieces of music data stored in the storage device 803 by manipulating the personal computer 820 and to store it in the memory card 209. The user is also able to select and reproduce desired music data in a music menu read from the optical disk 908 by the driver 805, to download the reproduced music data onto the wristband-type music reproducing device 100, and to store it on the memory card 209.

FIG. 17B illustrates the wristband-type music reproducing device 100 connected through an adapter (or data writer) 700 by a serial or parallel cable 81 to the personal computer 820 which is, in turn, connected to the network 900 or to a mobile communication terminal such as a portable telephone 914 which is, in turn, wirelessly connected to a base station 913 and hence to the network 900 such that the reproducing device 100 may send/receive serial or parallel data to/from the personal computer 820 or mobile communication terminal 914.

The personal computer 820 has functions similar to those of the personal computer of FIG. 17A. The mobile communication terminal 914 receives music data wirelessly via a radio base station 913 from a server 902 connected to the network 900, and sends the received data to the wristband-type music reproducing device 100 via the adapter 700 in accordance with the user's instruction. In this case, the user of the wristband-type music reproducing device 100 is able to use the personal computer 820 in a manner similar to that shown in FIG. 17A.

The user of the wristband-type music reproducing device 100 accesses the server 902 of the network 900 via the radio base station 913 from the mobile communication terminal 914 and wirelessly receives music menu information from a music data distribution site set on the server 902.

When the user of the terminal 914 selects desired music data from the music menu displayed on its display unit and receives the music data from the server 902, the user then sends the wristband-type music reproducing device 100 the received data through the external adapter 918, and stores the data in the memory card 209.

FIG. 17C illustrates that a memory card 209 set removable in the card receiver 209A in the wristband 302 of the wristband-type music reproducing device 100 receives music data from the personal computer 820 or a data kiosk 915 (or a multimedia terminal such as a vending machine installed in a station or a convenience store).

The personal computer 820 has functions similar to those of the personal computer of FIG. 17A. It is connected via a cable 81 to an external memory card adapter 810, and has the functions of writing music data to the memory card 209 set in the memory card adapter 810 and reading the data written to the memory card 209.

The data kiosk or vending machine 915 has a built-in memory which stores music data, and has the functions of storing in the memory music data received from the server 902 via the network 900, writing to the set memory card 209 music data corresponding to a title of music input at the control panel, and issuing a debit note for the written music data.

In this case, the user of the wristband-type music reproducing device 100 may set a prepared memory card 209 in the memory card adapter 810 connected to the personal computer 820, write the music data downloaded from the network 900 to the memory card 209 set in the memory card adapter 810, select and reproduce desired music data in a music menu read from an optical disk medium 908 by the driver, and write the music data under reproduction to the memory card 209 set in the card adapter 810.

The user of the reproducing device 100 may set the memory card 209 in position in the data kiosk 915, input a desired title of music at the control panel, confirm (for example, listens to) the contents of the music data stored in the memory of the data kiosk 915, cause the music data to be written to the memory card 209, and settle the user's accounts based on a debit note issued from the data kiosk 915.

Then, by setting the memory card 209 to which the music data is written by the personal computer 820 or data kiosk 915 in the memory card receiver 209A in the wristband-type music reproducing device 100, the user is able to reproduce and listen to the newly written music.

FIG. 18A illustrates that the wristband-type music reproducing device 100 has a radio data communicating function to receive music data wirelessly from the external device 800 comprising a portable information device such as a notebook type personal computer 830, and to store the data therein.

The wristband-type music reproducing device 100 has a radio communicating function (radio transmission/reception unit 218) using infrared rays, electromagnetic induction or weak radio waves to perform radio communication with the notebook-type personal computer 830 having a radio communicating function similar to that of the reproducing device 100 to thereby receive desired music data from the personal computer 830.

In addition to the radio communicating function using infrared rays, electromagnetic induction or weak radio waves, the personal computer 830 has the function of connecting to the network 900 or a mobile communication terminal such as a portable telephone 914 to send/receive data to/from the network or portable telephone. The personal computer 830 downloads music data from the server 902 via the network 900, and stores it in the memory 803. The personal computer 830 also accesses the server 902 connected to the network 900 via the radio base station 913, wirelessly receives music menu information from the music data distribution service site set in the server 902, displays the received music menu information, selects desired music data from the music menu, receives the music data sent by the server 902, and stores it in the memory 803.

In this case, the user of the wristband-type music reproducing device 100 manipulates the notebook-type personal computer 830 to access the server 902 on the network 900 connected by the cable to the computer 830 or the server 902 on the network 900 wirelessly connected to the mobile communication terminal 914 via the base station 913, selects a desired title of music from the music menu information sent from the server 902, downloads the corresponding music data, and stores it in the memory 803.

When the user instructs the computer 830 to send the music reproducing device 100 the music data stored in the computer, the music data is wirelessly sent from the personal computer 830 to the wristband-type music reproducing device 100 and stored on the memory card 209.

FIG. 18B illustrates that the wristband-type music reproducing device 100 having a short-distance radio communicating function (radio transmission/reception unit 218) wirelessly receives and stores music data from a nearby mobile communication terminal 914 or data kiosk 915.

In this case, the user of the wristband-type music reproducing device 100 may send a radio communication request to the mobile communication terminal 914 to connect to the same, cause the terminal 914 to access the server 902 connected to the network 900 via the radio base station 913, wirelessly receive from the terminal 914 the music menu information sent from the music data distribution service site set in the server 902, display it on the display unit of the reproducing device 100, select desired music data from the music menu, receive the selected music data via the terminal 914, and store it in the memory card 209.

The user of the wristband-type music reproducing device 100 may send a radio communication request to the data kiosk 915 having a wireless function to connect to the same wirelessly, wirelessly receive music menu information from the kiosk 915, displays it on the display unit of the reproducing device 100, select desired music data from the music menu, receive the selected music data via the kiosk 915, and store it in the memory card 209.

FIG. 18C illustrates that the wristband-type music reproducing device 100 having a function of wirelessly communicating with a mobile terminal communication network 917 and a function of receiving radio waves broadcast by a broadcasting station 916 (radio transmission/reception unit 218) receives desired music data from the broadcasting station 916 or the mobile terminal communication network 917 and stores the received music data.

The broadcasting station 916 or radio base station 913 of the mobile terminal communication network 917 has a function of downloading music data via a cable from a server 902 on the network 900 in response to a request to receive the music data from the wristband-type music reproducing device 100.

In this case, the user of the wristband-type music reproducing device 100 sends the radio base station 913 or broadcasting station 916 of the mobile terminal communication network 917 a request to connect wirelessly to the music data distribution server 902 to wirelessly connect to the radio base station 913 or broadcasting station 916 thereby to access the server 902 via the network 900, wirelessly receives via the radio base station 913 or the broadcasting station 916 music menu information sent from the music data distribution service site set on the server 902, displays it on the display unit of the reproducing device 100, selects desired music data from the music menu, receives the selected music data via the radio base station 913 or broadcasting station 916, and stores it on the memory card 209.

As described above, in the various manners shown in FIGS. 17A-C, and 18A-C, the wristband-type music reproducing device 100 is usable.

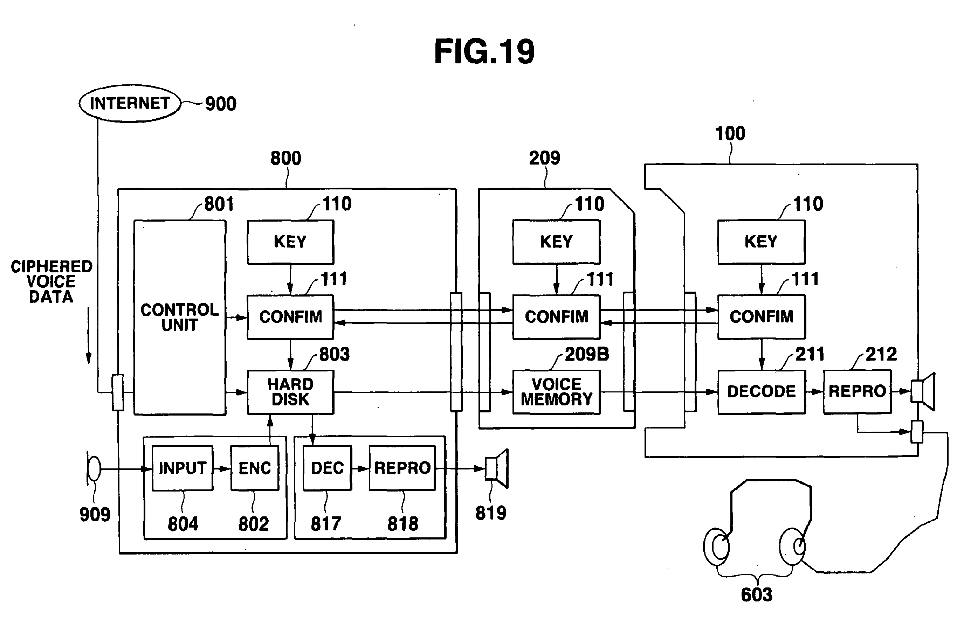

As shown in FIG. 19, the external device 800, memory card 209 and music reproducing device 100 may each have a function of protecting a music copyright. In this case, it is assumed that all compressed encoded music or voice data which the external device 800 downloads, for example, from the Internet 900 is beforehand ciphered. The external device 800, memory card 209, and music reproducing device 100 may mutually confirm that they are devices which achieve protection of the music copyright, decode the ciphered music data, and then reproduce/output a corresponding signal as music.

FIG. 19 is a block diagram of a system which comprises the external device 800, memory card 209 and music reproducing device 100 connected in this order. Each device has stored a common key 110 based on users' names or the like on a dedicated IC chip or in a dedicated memory area, and confirms and ciphers encoded music data and deciphers the encoded music data based on the common key 110, the principle of which will be described next.

When the ciphered music data is downloaded from the Internet 900 by the external device 800, the data is stored in the memory (hard disk) 803, and confirmation data 111 corresponding to the ciphered music data is created by the control unit 801 based on the key 110.

Then, the music data stored in the memory 803 and corresponding confirmation data 500 are written to the memory card 209. Thus, in the memory card 209, the ciphered music data can be confirmed and decoded by the key 110 and the confirmation data 111 on the memory card 209.

Then, when the ciphered music or voice data and the confirmation data 111 are read from the memory card 209 by the reproducing device 100, the reproducing device 100 confirms and decodes the ciphered music data, reproduces and outputs corresponding music or voice.

The confirming and decoding processes are all performed by the common key 110 based on all the users' names whereas different keys are stored and set in respective external devices 800 which other users have. Thus, even when the ciphered music data is copied by a user to the external device 800 which another user has, the music data cannot be confirmed and decoded by the former user because the former user's key is different from the latter user's key. Reference numerals 212 and 818 each denote a voice reproducing unit.

In the music reproducing system 1000 of the first embodiment, it was illustrated that the music data is specified by the external device 800 and sent to the wristband-type music reproducing device 100. The present invention, however, is not limited to this particular case. For example, music data to be received from the external device 800 may be specified by the input unit 202 of the music reproducing device 100.

In that case, when the communication mode is set by the mode switch 203 to enable communication, the control unit 210 of the wristband-type music reproducing device 100 sends the control unit 210 a signal to require to send the control unit 210 information on receivable music data. Upon receiving the request signal, the external device 800 reads music related data such as a music title and singer's name about the music data stored in the storage device 803, and then sends the data to the music reproducing device 100. Receiving such data, the music reproducing device 100 displays the data on the display unit 201. When the user selects desired music related data at the input unit 202, the control unit 210 requests the external device 800 to send the user encoded music data corresponding to the selected music related data. The external device 800 reads the requested encoded music data from the storage device 803 and sends the data to the music device 100. The music data 100 writes the received music data to the memory card 209 under control of the read/write control unit 214.

While the input unit 202 of the wristband-type music reproducing device 100 in the first embodiment is illustrated as being composed of switches and keys, as shown in FIG. 1, the present invention is not limited to this particular case. It may have any shape or composition as long as it can input instruction data for music reproduction. For example, it may comprise a rotary switch to select or determine a melody. It may further comprise a volume control key and/or dial.

The shapes of the buckles 401 and 402 are not limited to those shown in FIG. 1. If the wristband-type music reproducing device 100 can be worn on a wrist with a pair of wristbands 301 and 302 with the aid of the corresponding the buckles 401 and 402, the buckles may take any forms.

The encoding process performed by the music data encoder 802 of the external device 800 and the decoding process performed by the music data decoder 211 of the music reproducing device 100 may comprise encoding and decoding methods other than the MPEP audio method, or a combination of a plurality of encoding and decoding methods. For example, the encoding method may comprise an AAC (Advanced Audio Coding) or ATRAC (Adaptive Transform Acoustic Coding) system.

While in FIG. 1 the earphones 600 comprising corresponding speakers 603 to be put into the user's ears have been illustrated, the present invention is not limited to this particular case. For example, the earphones may be either top-type headphones which comprise a pair of ear pads worn on the user's ears and a band which rides on the user's head and connecting the pair of pads or neckband-type headphones which comprise a pair of ear pads worn on the user's ears and a neckband which rides on the user's head back and connecting the pair of ear pads.

The present invention is not limited to the details of the embodiment, and may be changeable as requested without departing from the scope of the appended claims.

### [Second Embodiment]

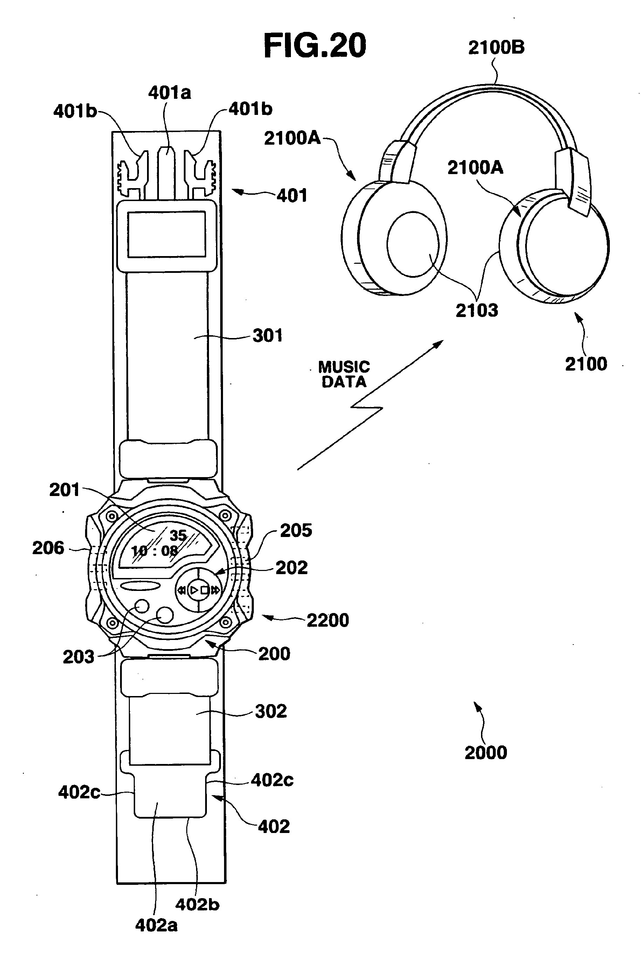

Next, referring to FIGS. 20-22, a wireless music reproducing system 2000 of a second embodiment of the present invention will be described.

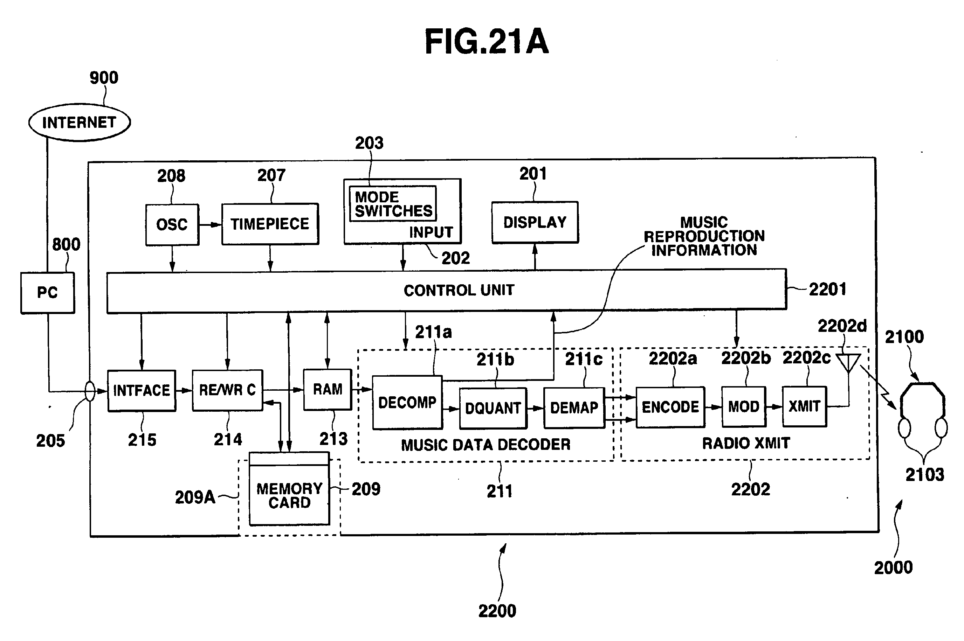

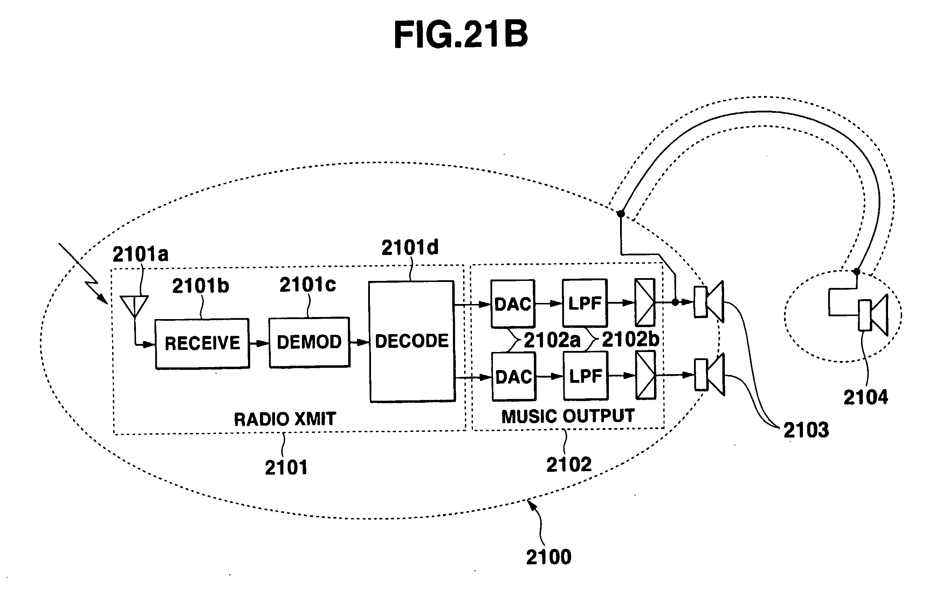

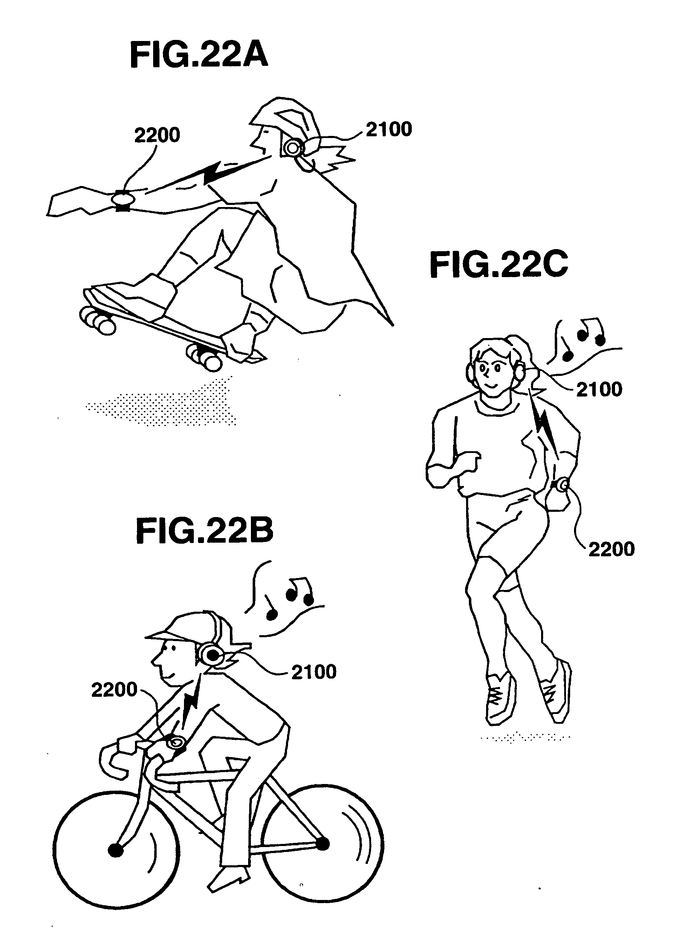

FIG. 20 shows wireless headphones 2100 and a wristband-type music reproducing device 2200 which compose a wireless music reproducing system 2000 as the second embodiment; FIGS. 21A and B are block diagrams of the wristband-type music reproducing device 2200 and the wireless headphones 2100, respectively; and FIGS. 22A, B and C each illustrate a different use of the wireless music reproducing system 2000.

In structure, as shown in FIG 20, the wireless music reproducing system 2000 comprises the wristband-type music reproducing device 2200 and the wireless headphones 2100. The wristband-type music reproducing device 2200 comprises a body 200 which contains the internal circuit of FIG. 21A, a pair of wristbands 301, 302 each connected at one end to the body 200, and a pair of buckles 401 and 402 each connected to a respective one of the other ends of the wristbands 301 and 302 so as to be worn on a user's body.

A display unit 201, an input unit 202 and mode switches 203 are provided of a surface of the body 200. An external device connector 205 and an earphone connector 206 are provided on opposite sides of the body 200. The body 200 has a memory card receiver 209A which comprises a space to receive the memory card 209.

The wireless headphone 2100 comprises a top-type headphone which, in turn, comprises a pair of ear pads 2100A worn on the user's ears and a band 2100B which rides on the user's head and connects the pair of the ear pads 2100A with a pair of speakers 2103 provided in the respective ear pads 2100A for outputting music. Each ear pad 2100A comprises a radio receiver 2101 and a music output unit 2102 (FIG. 21B) which receive music data from the wristband-type music reproducing device 2200 and output corresponding music.

Next, referring to FIGS. 21A and B, the internal compositions of the wristband-type music reproducing device 2200 and wireless headphones 2100, which compose the wireless music reproducing system 2000, will be described.

FIG. 21A is a block diagram of the wristband-type music reproducing device 2200. As shown in FIG. 21A, the wristband-type music reproducing device 2200 comprises a display unit 201, an input unit 202 which includes mode switches 203, a timepiece 207, an oscillator 208, a control unit 2201, a music data decoder 211, a RAM having a music data memory 213, a read/write control unit 214, an external interface 215 and a radio transmitter 2202 with a removable memory card 209.

Since the wristband-type music reproducing device 2200 of the second embodiment has substantially the same external and internal structure as the reproducing device 100 of the first embodiment of FIGS. 1 and 4, the same reference numeral is used to denote their similar elements and further description thereof will be omitted. The external and internal structural portions of the reproducing device 2200 different from those of the first embodiment will be described mainly.

The control unit 2201 controls in a centralized manner the respective components of the wristband-type music reproducing device 2200 to perform operation corresponding to one of timepiece, music and communication modes selected by a key-in signal provided by the mode switches 203.

In the timepiece mode, the control unit 2201 displays on the display unit 201 a date/time based on time data measured and provided by the timepiece 207, performs a timepiece function such as correction to the time in accordance with a relevant instruction inputted at the input unit 202, and displays a result of the processing on the display unit 201.

In the music mode, the control unit 2201 reads the compressed encoded music data stored on the memory card 209 set in the card receiver 209A based on an instruction of reproduction inputted at the input unit 202, or stores it in the music data memory 213, and reproduces corresponding music. In this case, the control unit 2201 decodes in a music data decoder 211 the music data stored in the music data memory 213, and sends the decoded data to the radio transmitter 2202. The transmitter 2202 encodes and modulates the music data for radio transmission, and then sends it to the headphones 2100.

In the communication mode, the control unit 2201 acquires the compressed encoded music data sent by the external device 800 via the external interface 215. The read/write control unit 214 writes the acquired music data to the memory card 209.

The external device 800 has the same composition as the external device of FIG. 4. It comprises a storage device 803 for storing music data, and a network connecting function (communication means) such as a modem 809/a LAN interface 808. It accesses the Internet 900 to download the music data from a music distribution service site (terminal) and then stores it in the storage device 803. The external device 800 is connected via an external adapter 700 (FIG. 8) to a connector 205 of the wristband-type music reproducing device 2200 to send the music data stored in the storage device 803 to the wristband-type music reproducing device 2200 and to write the data to the memory card 209.

The radio transmitter 2202 encodes in an encoder 2202a the PCM output signal (digital music data) decoded in the music data decoder 211, modulates it in a modulator 2202b and sends a resulting signal from a transmission unit 2202c via an antenna 2202d to the headphones 2100.

The internal circuit of the headphones 2100 of FIG. 21B comprises a radio receiver 2101, a music output unit 2102, and a pair of headphone speakers 2103. An earphone 2104 may be connected to the headphone 2100 such that music is output from the pair of headphone speakers 2103 and earphone 2104.

The radio receiver 2101 receives in a reception unit 2101b via the antenna 2101a the digital data (PCM output signal) sent from the wristband-type music reproducing device 2200, demodulates it in a demodulator 2101c, decodes a resulting signal in a decoder 2101d and then sends a resulting signal to the music output unit 2102.

The music output unit 2102 converts the input digital music data to analog music signals in a pair of D/A converters 2102a, eliminates high-frequency components in a pair of LPFs (Low Pass Filters) 2102b, and audibly outputs resulting data from the pair of headphone speakers 2103 and/or earphone 2104.

In operation, it is assumed that the wristband-type music reproducing device 2200 is worn on the user's wrist or upper arm, that compressed encoded music data is stored on the memory card 209, and that the headphones 2100 is worn on the user's ears.

When the user sets the music mode with the mode switches 203 provided on the wristband-type music reproducing device 2200, its control unit 2201 displays on the display unit 201 music reproduction information set in a first piece of music such as its title "TRK-1" and a performance time "01' 10" ". Then, when the user manipulates the input unit 202 for music reproduction, the control unit 2201 reads a piece of music corresponding to the "TRK-1" from the music data stored on the memory card 209 and stores it in the RAM 213. The music data decoder 211 decodes the encoded music data and then sends resulting data to the radio transmitter 2202. Simultaneously, the decoder 211 sequentially sends the control unit 2201 data on the music reproduction information (music title, performance time, etc.,) extracted when the music data is decomposed into frames in the music data decoder 211. The radio transmitter 2202 encodes and modulates the decoded digital music data and then sends resulting data to the headphones 2100 for radio transmission. The control unit 2201 displays the music reproduction information (music related data) on the display unit 201.

In the headphones 2100, when the radio receiver 2101 receives the digital music data, the voice output unit 2102 converts the received digital music data to analog music data, which is then output from the pair of headphone speakers 2103 or earphone 2104.

When the user manipulates the input unit 202 of the wristband-type music reproducing device 2200 for fast feed-or rewind- reproduction or for stopping the reproduction, the control unit 2201 controls reproduction of a related piece of music; i.e., reproduces the music after fast feeding or rewinding the music or stops the music. At this time the control unit 2201 extracts the music reproduction information (music related data) from the music data decoder 211, and displays the information on the display unit 201.

When the mode switches 203 of the wristband-type music reproducing device 2200 are operated to select the timepiece mode, the control unit 2201 displays on the display unit 201 the time data obtained in the timepiece 207. The control unit 2201 also corrects the present time based on data on time correction input at the input unit 202, and displays a time representing a result of the correction on the display unit 201.

As described above, the wireless music reproducing system 2000 of the first embodiment comprises the wireless headphones 2100 wearable on the user's ears for listening to music, and the wristband-type music reproducing device 2200 wearable on the user's wrist.

The wristband-type music reproducing device 2200 comprises the music data decoder 211 which decodes and reproduces music data stored on the memory card 209, the radio transmitter 2202 which sends the headphones 2100 the music reproduced by the music data decoder 211, the body 200 which contains the music data decoder 211 and the radio transmitter 2202, the pair of wristbands 301, 302 each attached at one end to a respective one of the opposite ends of the body 200, and the pair of buckles 401 and 402 each connected to a respective one of the other ends of the wristbands 301 and 302 for wearing purposes. The input unit 202 is provided on the upper surface of the body 200 such that the input unit 202 worn on a wrist is operated at hand to cause the music data decoder 211 to reproduce music, which is then wirelessly sent to the headphones 2100 to thereby allow the user to listen to the music.

Thus, the wireless type music reproducing system 2000 of the second embodiment produces an advantageous effect that the user can manipulate the wristband-type music reproducing device 2200 worn on the user's wrist or upper arm to thereby enable the user to listen music from the wireless headphones 2100, in addition to the advantageous effects produced by the wristband-type music reproducing device 100 and the music reproducing system 1000 of the first embodiment.

FIGS. 22A, B and C each illustrate an example of use of the music reproducing system 2000 of the second embodiment, wherein the wristband-type music reproducing device 2200 is worn on the user's wrist and the pair of headphones 2100 are worn on his ears to listen to music provided by the headphones 2100 based on a corresponding music signal produced by the wristband-type music reproducing device 2200 in response to the user's manipulation. Thus, the user is able to move the parts of his or her body freely, without being hindered by an earphone cord which would otherwise occur as in the prior art, for example, in skateboarding (vehement sport), bicycling, and jogging, respectively, shown in FIGS. 22A, B and C.

Since the input unit 202 is provided on the case 200 of the wristband-type music reproducing device 2200, the input unit 202 can be easily operated to reproduce or stop the music rapidly and easily with the reproducing device 2200 worn on the wrist.

The details of the present invention are not limited to the above embodiment, but may be changeable appropriately without departing from the scope of the appended claims. For example, the headphones 2100 may comprise a music data decoder 211 and a radio receiver 2101 such that the compressed encoded music data read from the RAM 213 of the wristband-type music reproducing device 2200 is encoded and modulated by the radio transmitter 2202 so as to provide a radio transmit signal, which is then sent to the headphones 2100, which demodulates the signal received from the radio transmitter 2202, decodes resulting digital data in the music data decoder 211, D/A converts the resulting digital data from the decoder 211 to analog music data, which is then output audibly.

Alternatively, the wristband-type music reproducing device 2200 may comprise a music data decoder 211 and a music data output unit such that the compressed encoded music data stored in the RAM 213 is decoded to provide digital music data (PCM output signal), which is then converted to analog music data, which is then modulated by the radio transmitter 2202 and sent to the headphones 2100, and that the headphones 2100 demodulates the received analog music data and outputs it from the pair of headphone speakers 2103 and earphone 2104.

### [Third Embodiment]

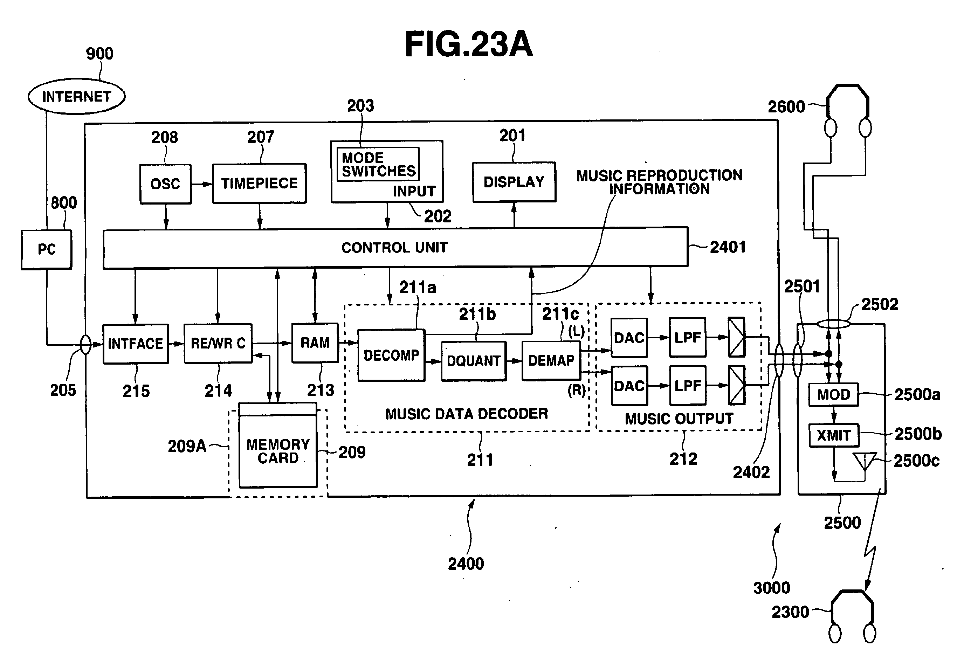

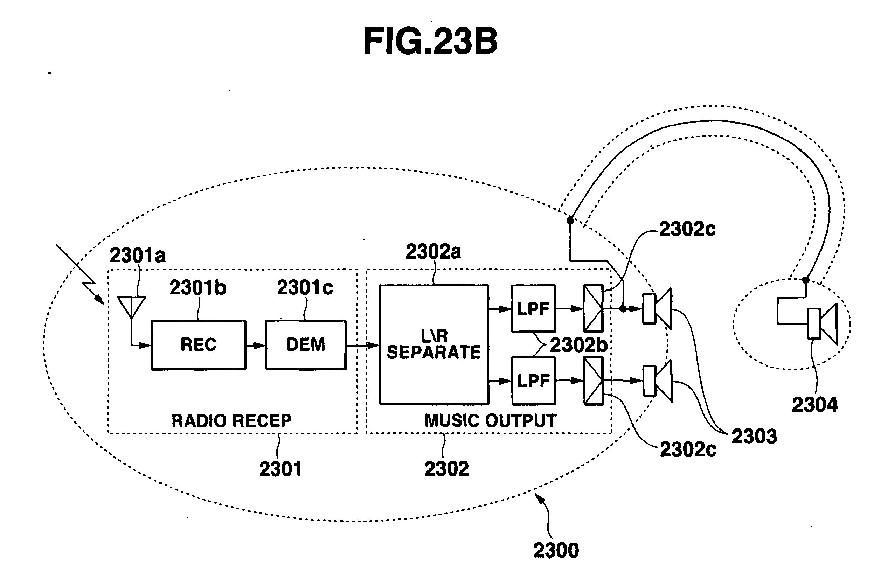

A wireless music reproducing system 3000 as a third embodiment will be described next with respect to FIGS. 23A and B which are block diagrams of a wristband-type music reproducing device 2400 and a wireless headphones 2300 which compose the system 2000, respectively.

In structure, the wristband-type music reproducing device 2400 comprises a body 200 and a radio transmission adapter 2500 attached removably to the body 200. The body 200 wirelessly sends/receives data via the adapter 2500 to/from the wireless headphones 2300.

The radio transmission adapter 2500 has terminals 2501 connectable to a connector 206 (FIG. 1) provided on a side of the body 200 of the wristband-type music reproducing device 2400. Thus, the radio transmission adapter 2500 receives music data via the terminals 2501 from the wristband-type music reproducing device 2400, modulates it for radio transmission in a modulator 2500a, and then wirelessly sends it in a transmission unit 2500b via an antenna 2500c to the headphones 2300.

The radio transmission adapter 2500 also functions as means for connecting to wired earphones (or headphones) 2600. In addition to the terminals 2501 connected to the earphone connector 206 of the wristband-type music reproducing device 2400, the radio transmission adapter 2500 comprises a large-diameter earphone connector 2502 to be connected to the wired earphones 2600. Thus, the wired earphones 2600 used may be a one having a commercially available earphone jack of a general standard size. The size of the wristband-type music reproducing device 2400 is neither required to be increased nor is an earphone having a dedicated jack required to be used.

In the following explanation, description of the external and internal components of the wristband-type music reproducing device 2400 and headphones 2300 identical or similar to those of the wristband-type music reproducing device 2400 and headphones 2100 of the second embodiment of FIGS. 20 and 21 will be omitted. Those identical or similar components are identified with the same reference numeral.

The wristband-type music reproducing device 2400 of the third embodiment comprises a display unit 201, an input unit 202 which includes mode switches 203, a timepiece 207, an oscillator 208, a control unit 2401, a music data decoder 211, a music output unit 212, a RAM (music data memory) 213, a read/write control unit 214, and an external interface 215 with a removable memory card 209.

The control unit 2401 reads compressed encoded music data from the memory card 209 set in the card receiver 209A in response to the user's manipulation for reproduction at the input unit 202, and then stores it in the RAM 213. The control unit 2401 decodes in the music data decoder 211 the music data stored in the RAM 213, converts the decoded data to an analog signal in the music output unit 212, and then sends it to the radio transmission adapter 2500. When the earphone jack is connected to the connector 2502 in the adapter 2500, the analog music data is sent to the wired earphones 2600 which outputs a corresponding music sound audibly. If the wired earphones 2600 are not connected to the connector 2502, the analog music data is modulated and then sent to the headphones 2300 for wireless transmission.

The internal circuit of the headphones 2300 of FIG. 23B will be described next. The headphones 2300 comprises a radio receiver 2301, a music output unit 2302, and a pair of headphone speakers 2303. The headphones 2300 itself may be further connected to the earphone 2304 so as to provide outputs from the pair of headphone speakers 2303 and the earphone 2304.

The radio receiver 2301 receives in a reception unit 2301b via an antenna 2301a the analog music data sent by the wristband-type music reproducing device 2400, demodulates it in a demodulator 2301c, and then outputs the resulting signal to the music output unit 2302. The music output unit 2302 separates the demodulated analog music data into right and left signals in a separator 2302a, filters out high frequency components in a pair of low pass filters (LPFs) 2302b, and then outputs resulting signals to the pair of headphone speakers 2303 and earphone 2304.

In operation, it is assumed in the wristband-type music reproducing device 2400 of the third embodiment that the memory card 209 which has stored compressed encoded music data is worn on the user's wrist or upper arm. It is also assumed that the headphones 2300 is set on the user's ears, and that the wristband-type music reproducing device 2400 is connected to the radio transmission adapter 2500.

When the user sets the music mode with the mode switches 203 provided on the wristband-type music reproducing device 2400, the control unit 2401 of the wristband-type music reproducing device 2400 displays on the display unit 201 music reproduction information set for a first piece of music such as a music title "TRK-1" and a performance time "01'10'' ". Then, when the user manipulates the input unit 202 for music reproduction, the control unit 2401 reads music data corresponding to the "TRK-1" from the music data stored on the memory card 209. The music data decoder 211 decodes the read music data. The music output unit 212 performs D/A conversion on the decoded music data and sends the resulting analog data to the radio transmission adapter 2500. The radio transmission adapter 2500 sends the analog music data to the headphones 2300 and also sends sequentially the control unit 2401 the music reproduction information (music related data) extracted in the frame decomposition performed by the music data decoder 211. The control unit 2401 then displays the music reproduction information on the display unit 201.

In the headphones 2300, when the radio receiver 2301 receives the analog music data, the voice output unit 2302 separates the received analog music data into right and left music data, which are then output audibly from the pair of headphone speakers 2303 and earphone 2304.

When the user manipulates the input unit 202 of the wristband-type music reproducing device 2400 for fast feed-or rewind-reproduction or for a stopping purpose, the control unit 2401 performs a corresponding operation, that is, reproduces the music by fast feed or rewind operation or stops the music. Each time this occurs, the control unit 2401 displays on the display unit 201 music reproduction information extracted from the music data decoder 211.

When one of the mode switches 203 of the wristband-type music reproducing device 2400 is operated to select the timepiece mode, the control unit 2401 displays on the display unit 201 the time data obtained in the timepiece 207. The control unit 2401 also corrects the time in response to correction to the time inputted at the input unit 202, and displays a result of the correction on the display unit 201.

As described above, the music reproducing system 3000 of the third embodiment comprises the removable radio transmission adapter 2500 on the side of the wristband-type music reproducing device 2400. The radio transmission adapter 2500 has the connector 2502 to which the earphone jack is connected. Thus, the wired earphones 2600 may be connected to the connector 2502 for listening to the music, or the wireless headphones 2300 may receive music data wirelessly from the reproducing device 2400, so that the user may listen to the corresponding music.

Thus, when music is to be reproduced, the radio transmission adapter 2500 is attached to the wristband-type music reproducing device 2400 such that the wired earphones 2600 or wireless headphones 2300 may be used as desired. When no music is reproduced, the radio transmission adapter 2500 may be removed from the wristband-type music reproducing device 2400 so that the music reproducing device 2400 may be used as a general timepiece. In that case, the music reproducing device 2400 becomes more compact than when it is worn on the wrist.

### [Fourth Embodiment]

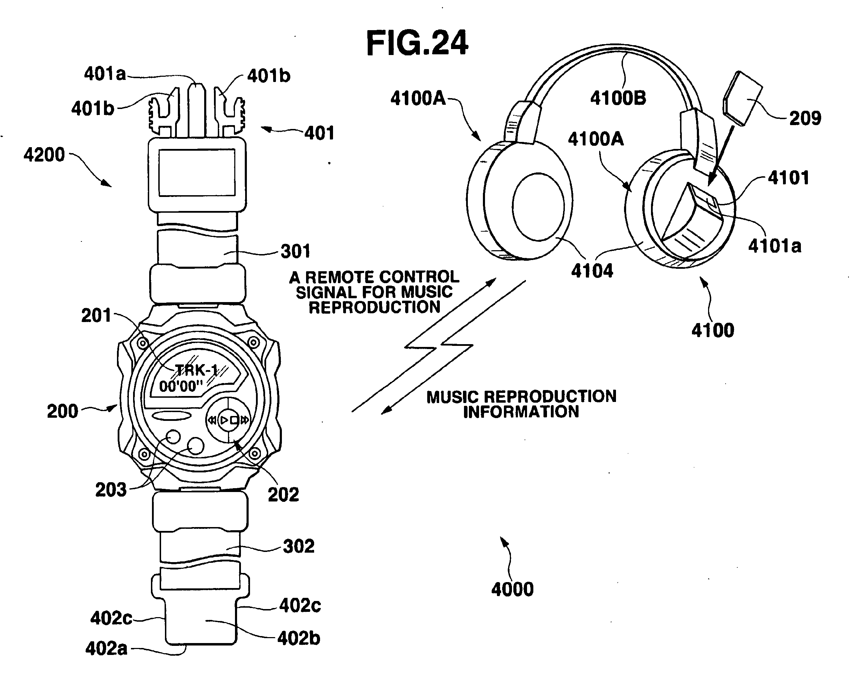

Referring to FIGS. 24-26, a wireless music reproducing system 4000, which comprises a headphone-type music reproducing device 4100 and a wristband-type remote control device 4200, as a fourth embodiment of the present invention, will be described next.

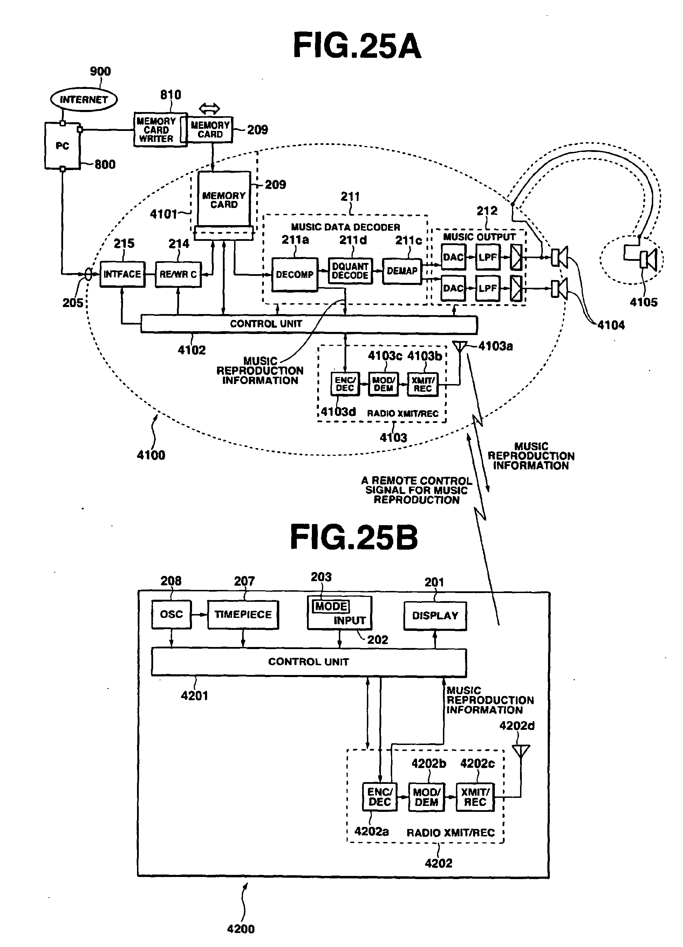

FIG. 24 shows the appearances of the headphone-type music reproducing device 4100, and the wristband-type remote control device 34200 connected wirelessly thereto. FIGS. 25A and B are block diagrams of the headphone-type music reproducing device 4100 and the wristband-type remote control device 4200, respectively.

In structure, as shown in FIG. 24, the wristband-type remote control device 4200 comprises an internal circuit of FIG. 25B, a body 200 which contains the internal circuit, a pair of wristbands 301 and 302 each attached at one end to a respective one of the opposite edges of the body 200, and a corresponding pair of buckles 401 and 402 which are respectively connected to the other ends of wristbands 301 and 302 of the pair so as to be engaged with each other to thereby worn on the user's wrist or upper arm.

The wristband-type remote control device 4200 has the same appearance as the wristband-type music reproducing device 100 of FIG. 1. Thus, the same reference numeral is used to denote similar elements of those devices, and further description thereof will be omitted.

The headphone-type music reproducing device 4100 takes the form of a top-type headphone which, in turn, comprises a pair of ear pads 4100A worn on the user's ears, and a band 4100B riding on the user' s head and connecting the pair of ear pads 4100A. At least one of the ear pads 4100A has a memory card slot 4101 in which the memory card 209 of a semiconductor storage medium is settable. Provided within the memory card slot 4101 are terminals (not shown) which are brought into contact with electrodes provided on the memory card 209 when the card 209 is placed in position in the slot such that data is read/written from/to the memory card 209 through the terminals and electrodes by a read/write control unit 214.

The shape of the memory card slot 4101 is not limited to that shown in FIG. 24. For example, the memory card 209 may be set in a card receiver provided within one of the ear pads 4100A and held by an openable cover such as a battery compartment cover so as not to drop out, as shown in FIGS. 12-16. The cover may be fixed, for example, with screws. Alternatively, the memory card may be set within a drawer or set easily and removably in a card receiver with a lock mechanism. In this case, for example, watertight packing may additionally be used along with the cover so as to protect the memory card 209 from wetting with rain or water.

The headphone-type music reproducing device 4100 has a connector 205 through which the device 4100 receives compressed encoded music data from an external device 800 such as a PC. That is, the device 4100 acquires the encoded music data stored in the external device 800 through the adapter 700 of FIG. 8, the connector CN and the connector 205. A control unit 4102 writes the data through the read/write electrodes to the memory card 209 and also reproduces music data stored in the memory card 209 in accordance with a remote control signal received from the wristband-type remote control device 4200.

Now, referring to FIG. 25, the circuit compositions of the headphone-type music reproducing device 4100, the wristband-type remote control device 4200, and a whole composition of a music reproducing system 4000 which comprises the devices 4100 and 4200 will be described next.

As shown in FIG. 25A, the headphone-type music reproducing device 4100 comprises the control unit 4102, a music data decoder 211, a music output unit 212, a memory card 209, a read/write control unit 214, an external interface 215, a radio reception unit 4103, and a pair of headphone speakers 4104. The headphone-type music reproducing device 4100 may be connected to an earphone 4105 so as to provide an additional audible output.

The control unit 4102 reads compressed encoded music data from the memory card 209 set in the slot 3101 provided in the ear pad 4100A in accordance with a remote control signal received by the radio transmission/reception unit 4103, decodes the music data in the music data decoder 211, D/A converts in the music output unit 212 the decoded data to analog data, which is then output audibly from the pair of headphone speakers 4104 or earphone 4105.

Receiving the compressed encoded music data from the external device 800 via the external interface 215, the read/write control unit 214 specifies a write location in the memory card 209 and writes the data there. The external device 800 may download the music data from the Internet 900. The external device 800 may write the downloaded music data to the memory card 209 with a memory card writer 810. Such memory card 209 may be set in the memory card slot 4101 of the headphone-type music reproducing device 4100 for use.

When the radio transmission/reception unit 4103 receives in a transmit/receive stage 4103b via an antenna 4103a a remote control signal from the wristband-type remote control device 4200, it demodulates and decodes the remote control signal in demodulating and decoding stages 4103c and 4103d, respectively, and then outputs a resulting signal to the control unit 4102. The radio transmission/reception unit 4103 encodes in an encoder/decoder unit 4103d according to a predetermined encoding system the music reproduction information extracted in the music data decoder 211, modulates it to a radio transmit signal in the modulate/demodulate stage 4103c and then sends the signal via the antenna 4103a to the wristband-type remote control device 4200 from the transmit/receive stage 4103b.

The music data decoder 211, music output unit 212, memory card 209, read/write control unit 214, and external interface 215 of the fourth embodiment are identical in structure to the corresponding ones of the first embodiment, and hence further description thereof will be omitted. The same reference numeral is used to denote the same element of the fourth and first embodiments.

With reference to FIG. 25B, the circuit of the wristband-type remote control device 4200 will be described next which comprises a display unit 201, an input unit 202 comprising mode switches 203, a timepiece 207, an oscillator 208, a control unit 4201, and a radio transmission/reception unit 4202.

The control unit 4201 controls in a centralized manner the respective relevant elements of the wristband-type remote control device 4200 to perform operation corresponding to the one of the timepiece and music modes determined based on a mode select key-in signal output from the mode switches 203.

In the timepiece mode, the control unit 4201 displays on the display unit 201 a date/time based on time data provided by the timepiece 207, or performs a timepiece function corresponding to a relevant instruction of operation input at the input unit 202 and displays resulting data on the display unit 201.

In the music mode, the control unit 4201 sends the radio transmission/reception unit 4202 a remote control signal on music reproduction input at the input unit 202, and displays on the display unit 201 the music reproduction information received in the radio transmission/reception unit 4202 from the headphone-type music reproducing device 4100.

The radio transmission/reception unit 4202 encodes the remote control signal received from the control unit 4201 in an encode/decode stage 4202a according to a predetermined encoding method, modulates the encoded signal in a modulate/demodulate stage4202b, and sends a resulting signal from the antenna 4202d to the headphone-type music reproducing device 4100 through a transmit/receive stage 4202c. The radio transmission/reception unit 4202 receives music reproduction information (or music related data) from the headphone-type music reproducing device 4100 in the transmission/reception stage 4202c, demodulates it in the modulate/demodulate stage 4202b, decodes a resulting signal in the encode/decode stage 4202a and then delivers a resulting signal to the control unit 4201.

The display unit 201, input unit 202, timepiece 207, and oscillator 208 of the fourth embodiment are identical in composition and operation to those corresponding ones of the first embodiment as described above, and hence further description thereof will be omitted. The same reference numeral is used to denote the same or similar elements of the first and fourth embodiments.

In operation, it is assumed that the headphone-type music reproducing device 4100 is worn on the user's ears, that the memory card 209 set in the memory card slot 4101 in the device body has stored a plurality of compressed encoded music data, and that the wristband-type remote control device 4200 is worn on the user's wrist.

When the user sets the music mode with the mode switches 203 provided on the wristband-type remote control device 4200, the control unit 4201 of the remote control device 4200 displays on the display unit 201 music reproduction information for a first piece of music such as a title of music "TRK-1" and a performance time "01'10''". Then, when the user inputs an instruction of music reproduction at the input unit 202, the control unit 4201 sends a remote control signal for music reproduction to the radio transmission/reception unit 4202 and thence to the headphone-type music reproducing device 4100.

When the headphone-type music reproducing device 4100 receives the remote control signal for music reproduction in the radio transmission/reception unit 4103, the control unit 4102 reads music data corresponding to the title of music "TRK-1" from the music data stored on the memory card 209, and decodes it in the music data decoder 211. The music output unit 212 D/A converts the decoded data, outputs a resulting music sound audibly from the headphone speaker 4104, and sequentially delivers to the control unit 4102 music reproduction information (music title, performance time, etc.) extracted in the frame decomposition in the music data decoder 211. The control unit 4102 then sends this information via the radio transmission/reception unit 4103 to the wristband-type remote control device 4200.

When the control unit 4201 of the wristband-type remote control device 4200 receives the music reproduction information, it displays the received reproduction information (music title, performance time) on the display unit 201.

When the user manipulates the input unit 202 of the wristband-type remote control device 4200 for fast feed- or wind-reproduction or for a stopping purpose, the input unit 202 sends a corresponding remote control signal via the radio transmission/reception unit 4202 to the headphone-type music reproducing device 4100.

When the reproducing device 4100 receives the remote control signal from the remote control device 4200, it reproduces corresponding music in a fast-feeding or rewinding manner or stops reproduction of the music in accordance with the contents of the remote control signal. Each time this occurs, the control unit 4102 sends the music reproduction information (music related data), delivered by the music data decoder 211, via the radio transmission/reception unit 4103 to the wristband-type remote control device 4200, which then displays the received information on the display unit 201.

When the mode switches 203 of the wristband-type remote control device 4200 are operated so as to select the timepiece mode, the control unit 4201 displays the time data measured by the timepiece 207 on the display unit 201, and also performs another timepiece function such as timepiece correction in accordance with relevant data input by the user at the input unit 202.

As described above, in the music reproducing system 4000 of the fourth embodiment, the headphone-type music reproducing device 4100 has the memory card slot 4101 which removably receives the memory card 209. The music reproducing system 4000 also comprises the music reproducing means which in turn comprises the music data decoder 211 and the music output unit 212, and the radio transmission/reception unit 4103 which receives a remote control signal from the input unit 202 of the wristband-type remote control device 4200.

The wristband-type remote control device 4200 comprises the input unit 202 which is manipulated for music reproduction in the headphone-type music reproducing device 4100, and the radio transmission/reception unit 4202 which sends a remote control signal from the input unit 202 to the headphone-type music reproducing device 4100. The reproducing device 4100 reproduces music in accordance with the remote control signal received from the wristband-type remote control device 4200 and then outputs a correspond musical sound. Music reproduction information corresponding to the reproduced music is sent from the headphone-type music reproducing device 4100 to the wristband-type remote control device 4200 and the displayed on its display unit 201.

The wristband-type remote control device 4200 selects between the music and timepiece modes. In the music mode, the input unit is manipulated so as to reproduce music in the headphone-type music reproducing device 4100, and to display music reproduction information on the display unit 201. In the timepiece mode, the present time is displayed on the display unit 201 or other timepiece functions are performed.

In a state where the headphone-type music reproducing device 4100 is worn on the user's ears with the wristband-type remote control device 4200 being worn on the user's wrist or arm, music reproduction can be remotely controlled in the headphone-type music reproducing device 4100 in accordance with manipulation data inputted by the user at the wristband-type remote control device 4200.

In this case, the user can rapidly manipulate the wristband-type remote control device 4200 at hand or perform music reproduction easily even during sport or bicycling.

Since the wristband-type remote control device 4200 has the display unit 201 on which data related to the music under reproduction (a title of music, singer's name, a performance time, etc.) is displayed, the user can manipulate the input unit at hand for music reproduction while confirming the displayed music reproduction information.

The user can change the operational mode from the timepiece mode to the music mode and vice versa with the mode switches 203 of the wristband-type remote control device 4200 so as to operate the headphone-type music reproducing device 4100 in the changed mode. For example, the user can select the timepiece mode during listening to the music so as to display the present time instantaneously on the display unit 201. That is, the wristband-type remote control device 4200 can be used as a general wristwatch.

Since the headphone-type music reproducing device 4100 is adapted to receive the small memory card 209 as a storage medium for music data, it is convenient to carry, resists shocks/vibrations sufficiently, and reproduces high-quality musical sounds.

Since in the music reproducing system 4000 compressed encoded music data can be written to the memory card 209 via the connector 205, the adapter 700 and connector CN from the external device 800, desired music data can be easily acquired and reproduced anytime and anywhere.

While in the second-fourth embodiments the wireless headphones 2100 and 2300 and the headphone-type music reproducing device 4100 are illustrated as taking the form of a top-type headphone which comprises a pair of ear pads 2100A (or 4100A) applied to the user's ears and a band 2100B (or 4100B) riding on the user's head so as connect both the ear pads (FIGS. 20 and 24), the present invention is not limited to these particular cases. For example, a neckband headphone-type music reproducing device may be used which comprises a pair of ear pads applied to the user's ears and a neckband placed so as to ride on the user's head back to support the pair of ear pads.

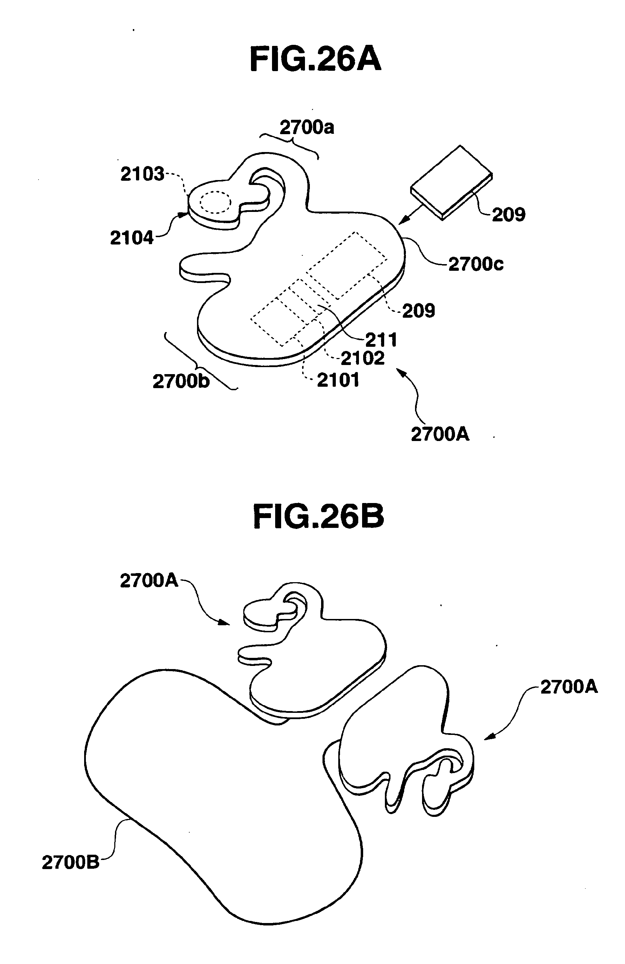

FIG. 26A illustrates an earphone-type music reproducing device 2700A of another embodiment. The music reproducing device 2700A comprises an earphone body 2104 which contains a speaker 2103, a curved area 2700a extending at one end from the earphone body 2104 so as to coincide substantially with an outline of an ear, and a device body 2700b connected to the other end of the curved area 2700a and containing an internal circuit which receives a memory card 209 to reproduce music based on the music data stored in the memory card 209. The device body 2700b has a slot 2700c in which the memory card 209 is settable, and comprises a music data decoder 211, a music output unit 2102 and a radio transmission/reception unit 2101 which reproduce music based on the music data stored on the memory card 209 or built-in music memory.

In use, the earphone-type music reproducing device 2700A is used such that the curved area 2700a is put on a corresponding ear of the user and the earphone body 2104 is applied lightly to or inserted into the corresponding ear of the user. Thus, the music data sent wirelessly by the reproducing device 2200 or 2400 is received by the radio receiver 2101 and output by the music output unit 2102. Alternatively, music may be reproduced in the music data decoder 211 and the music output unit 2102 based on the music data stored on the memory card 209 or built-in music memory in accordance with the remote control signal sent from the wristband-type remote control device 4200 of the fourth embodiment and received by the radio receiver 2101 of the earphone type music reproducing device 2700A, and then output from the music output unit 2102.

As shown in FIG. 26B, a pair of symmetrical earphone-type music reproducing device 2700A connected electrically by a cord 2700B may be used to reproduce music in a stereophonic manner from a corresponding pair of speakers 2103 contained therein. Music data stored on one of a pair of memory cards 209 set in the corresponding pair of reproducing devices 2700A may be reproduced sequentially by manipulating the input unit 202 of the reproducing device 2200 or 2400 or the remote control device 4200.

In place of such pair of earphone-type music reproducing devices 2700A, a removable memory card 209, a built-in music memory, a music reproducing unit and a radio receiver may be provided in a hearing aid-type earphone.

The details of the present embodiment may be changeable without departing from the scope of the appended claims.

### [Fifth Embodiment]

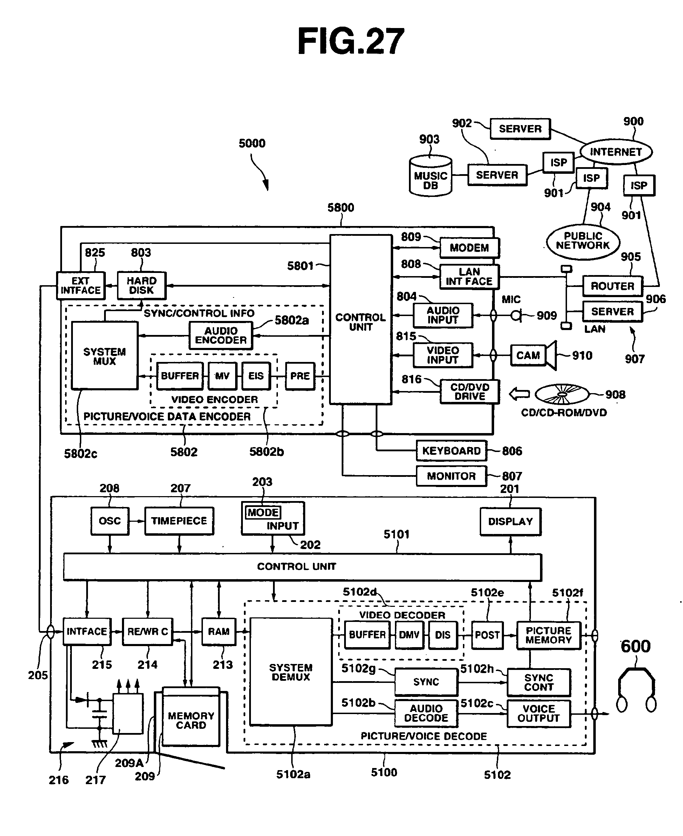

Referring to FIGS. 27-30, a picture/voice reproducing system 5000 which comprises a picture/voice reproducing device 5100 and an external device 5800 will be described next as a fifth embodiment.

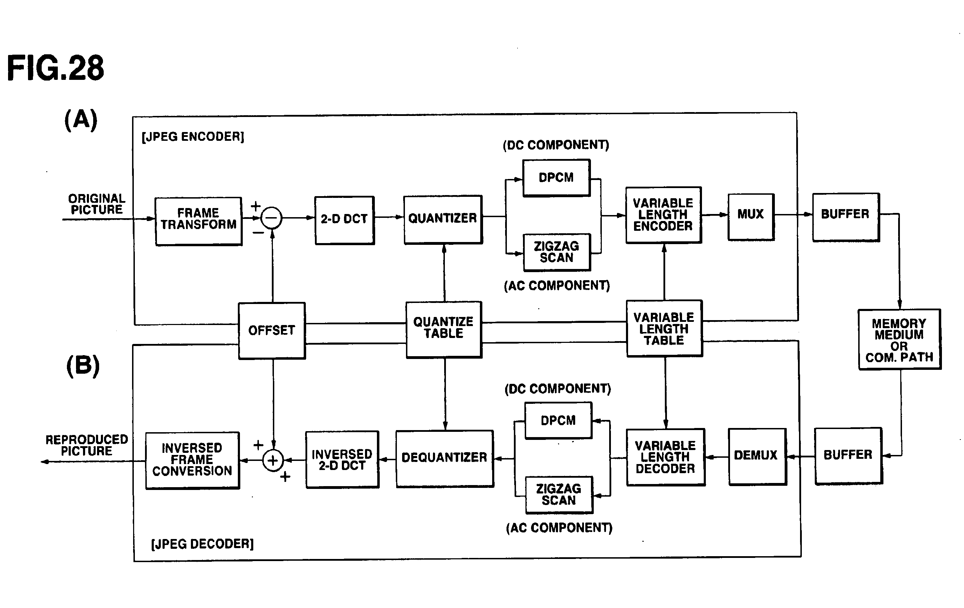

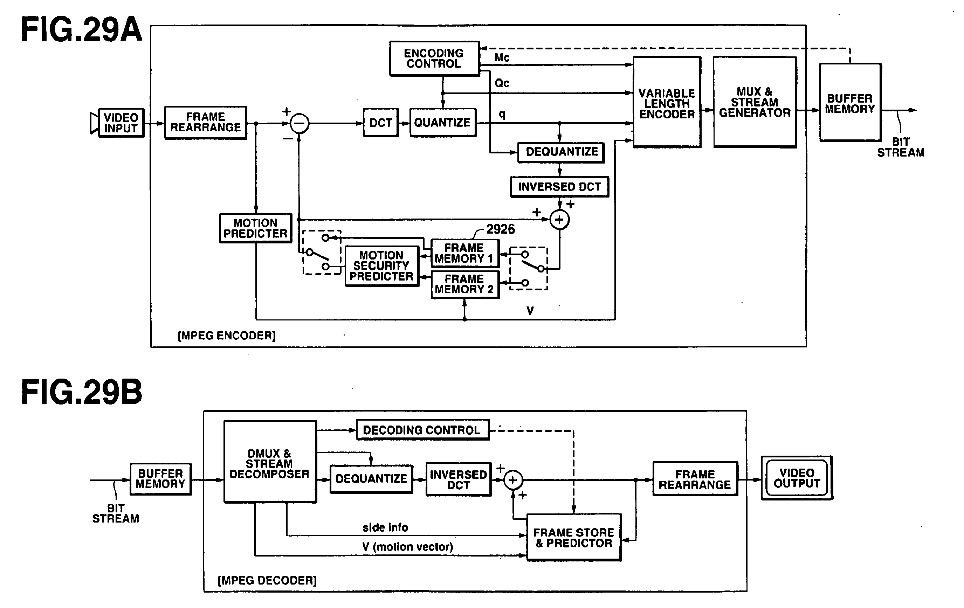

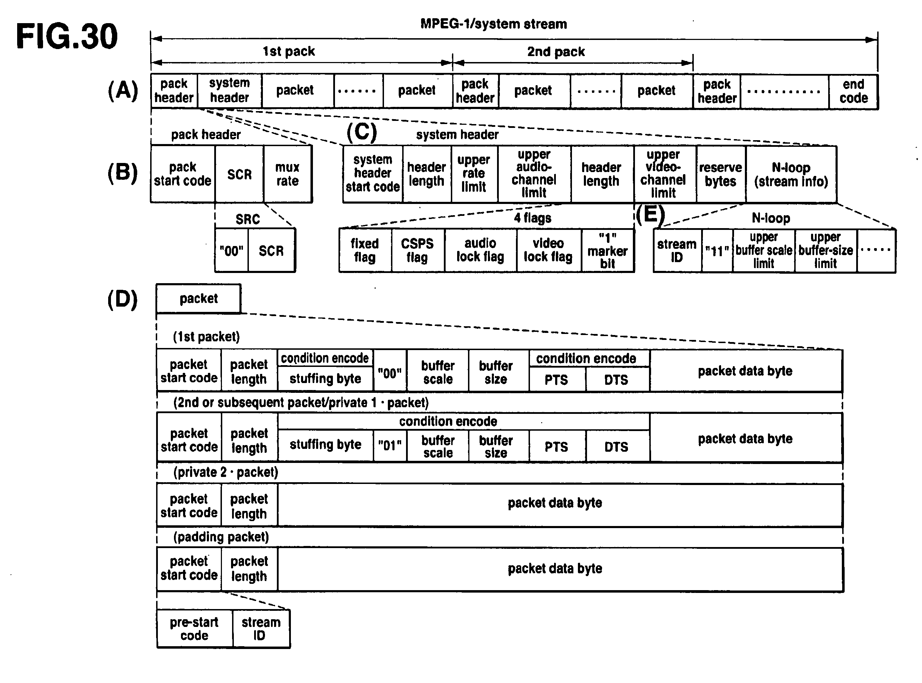

FIG. 27 is a block diagram of the picture/voice reproducing system 5000. FIG. 28 is a block diagram of an encoder and decoder for a JPEG still picture. FIG. 29 is a block diagram of an encoder and decoder for a MPEG dynamic picture. FIG. 30 illustrates a composition of a bit stream of an MPEG 1 system.

In structure, the picture/voice reproducing device 5100 of the fifth embodiment has the same external structure as the wristband-type music reproducing device 100 of FIG. 1. That is, the reproducing device 5100 comprises a body 200 which contains an internal circuit of the picture/voice reproducing device 5100 of FIG. 27, a pair of wristbands 301 and 302 connected at one end to opposite edges of the body 200 to be worn on the user's body and a pair of buckles 401 and 402 attached to the other ends of the wristbands 301 and 302, respectively, for engaging the pair of wristbands 301 and 302 with each other.

The body 200 also comprises on its opposite sides an external device connector 205 for connection to the external device 5800 and an earphone connector 206 for connection to the earphones 600.

As in the wristband-type music reproducing device 100 of the first embodiment, the external device adapter 700 of FIG. 8 is connected to the connector 205 to acquire picture/voice data from the external device 5800 via the adapter 700.

An earphone adapter 500 is attached to the earphone connector 206 to listen to a piece of music from the earphones 600. A radio transmission adapter 2500 shown in the third embodiment may be connected to the connector 206 to wirelessly send music data to the wireless headphones 2300.

The body 200 has on its surface a display unit 201, an input unit 202, and mode switches 203. It also has on its opposite sides the external device connector 205 and the earphone connector 206. The body 200 has a memory card receiver 209A in which the memory card 209 is settable.

As shown in FIG. 27, the internal circuit of the picture/voice reproducing device 5100 comprises the display unit 201, the input unit 202 comprising the mode switches 203, a timepiece 207, an oscillator 208, a control unit 5101, a RAM 213, a read/write control unit 214, an external interface 215, a rechargeable battery 216, a power supply control unit 217, and a picture/voice data decoder 5102 with the memory card 209 set removably in the memory card receiver 209A.

The display unit 201, input unit 202, mode switches 203, timepiece 207, oscillator 208, memory card 209, read/write control unit 214, external interface 215, rechargeable battery 216, and power supply control unit 217 are identical in composition to those corresponding elements of the first embodiment. Thus, further description of those devices will be omitted and the same reference numeral is used to denote identical elements of the third and first embodiments.

The control unit 5101 controls the picture/voice reproducing device 5100 in a centralized manner to perform operation corresponding to that of the timepiece, music video and communication modes selected based on a key-in signal provided by the mode switches 203. In the timepiece mode, the control unit 5101 produces data to display a date/time based on time data measured and provided by the timepiece 207, and displays the data on the display unit 201 or performs a timepiece function in accordance with an instruction given at the input unit 202 to display a result of the processing on the display unit 201.

In the music/video mode, the control unit 5101 reads encoded picture/voice data stored on the memory card 209 set in the memory card receiver 209A based on an instruction of reproduction given at the input unit 202, and stores the data in RAM 213. The control unit 5101 then decodes the data in a picture/voice data decoder (to be described later), displays the resulting picture data on the display unit 210, and delivers a reproduced music signal to the earphones 600.

In order to decode and reproduce encoded picture/voice data multiplexed as a bit stream to be described later (FIG. 30), the picture/voice data decoder 5102 comprises a system demultiplexer 5102a, an audio decoder 5102b, a voice output unit 5102c, a video decoder 5102d, a postprocess unit 5102e, and a picture memory 5102f. Reference characters VDM and ISD denote a video demultiplexer and an information source decoder, respectively.

In the picture/voice data decoder 5102, a system demultiplexer 5102a separates picture and voice data multiplexed in a single stream, the voice data is decoded by an audio decoder 5102b and is subjected to D/A conversion by a voice output unit 5102c. The picture data is decoded by a video decoder 5102d, and frames of the decoded picture data are rearranged in a post process unit 5102e, and the resulting data is then stored in the picture memory 5102f. At this time, the voice and picture are synchronously output from the voice output unit 5102c and the picture memory 5102f, respectively, based on sync information 5102g under control of a sync control unit 5102h. Thus, the picture is displayed on the display unit 201, and the corresponding voice is output audibly from the earphones 600. Reference characters VD and ISD denote a video demultiplexer and an information source decoder, respectively. Reference characters VM and ISE denote a video multiplexer and an information source encoder, respectively.

The audio decoder 5102b of the picture/voice data decoder 5102 has the same composition as, for example, the music data decoder (FIGS. 5 and 6) of the first embodiment as described in detail above, and further description thereof will be omitted. Reference characters VDM and ISD denote a video demultiplexer and an information source decoder, respectively.

The video decoder 5102d of the picture/voice data decoder 5102 may, for example, comprise a JPEG (Joint Photographic Coding Experts Group) decoder of FIG. 28 (B) or a MPEG decoder of FIG. 29 (B).

As shown in FIG. 28 (B), the JPEG decoder demultiplexes a multiplexed bit stream into respective bit streams of voice and picture data. The stream of picture data is processed in accordance with a variable length table and a quantization table and then dequantized. The resulting data and a relevant decoded DC coefficient are then subjected to inversed DCT (Discrete Cosine Transform). The resulting picture data frames are then rearranged into a reproduced picture, which is then output.

As shown in FIG. 29 (B), the MPEG decoder demultiplexes a multiplexed bit stream into respective streams of encoded picture and voice data. The stream of picture data is then decoded to in a variable length decoding system into motion vectors and quantized pictures. Relevant quantization transform coefficients are then dequantized and subjected to inversed DCT based on a quantization charactersistic specifying information (quantization index). A differential between an intraframe predictive picture and an interframe predictive picture is calculated. If the above-mentioned separated picture data involves an intraframe decoded picture, there is no differential picture. Thus, if the picture is output as it is, the original picture is reproduced. If the above-mentioned separated picture data involve an interframe predictive-coded picture, there is a differential between this picture data and the decoded picture data already stored in a frame store. Thus, a predictor reproduces a predictive picture based on the already decoded picture and relevant motion vectors stored in the frame store, and the differential picture data is added to the predicted picture data. Then, the frames are rearranged in predetermined output order and then output.

The methods of encoding/decoding the picture data may comprise the JPEG and MPEG methods or other methods. The picture/voice data may comprise graphic display data or bit map picture data inserted as externally added or side information (ancillary data) into a bit stream of encoded music data, for example, of MPEG audio in an easier low-rate transmission method.

The picture/voice reproducing device 5100 and the external device 5800 are connected through the external device adapter 700 (FIG. 8) and the connector CN described in the first embodiment. The external device 5800 comprises a storage device 803 for storing music data, a network connecting function (communicating means) comprising a modem 809 and a LAN interface 808 to access the Internet 900 to download encoded picture/voice data from a picture/voice distribution terminal (server 902), and to store the data in the storage device 803. The external device 800 is connected through the external device adapter 700 to the external connector 205 which is, in turn, connected to the picture/voice music reproducing device 5100 such that the picture/voice data stored in the storage device 803 is sent to the picture/voice reproducing device 5100 to thereby write the data to the memory card 209.

The external device 5800 comprises a control unit 5801, a storage device 803, an audio input unit 804, a CD/DVD drive 816, a keyboard 806, a display monitor 807, a LAN interface 808, a modem 809, an external interface 825, a picture/voice data encoder 5802, and a video picture input unit 815, which are connected by buses.

The storage device 803, audio input unit 804, CD/DVD drive 816, keyboard 806, display monitor 807, LAN interface 808, modem 809, external interface 825 are identical in composition and operation to those are described with reference to the first embodiment. Thus, further description of those devices will be omitted and the same reference numeral is used to denote identical elements of FIGS. 4 and 27.

The control unit 5801 reads picture/voice data stored on an optical disk 908 such as a CD, CD-ROM or DVD with the aid of a CD-DVD drive 816, delivers the read data to a picture/voice data encoder 5802. The encoder 5802 encodes the data in a predetermined encoding system and then stores it in the storage device 803.

Analog voice data provided by a microphone 909 or the like is PCM encoded in an audio input unit 804. The resulting data is delivered to the control unit 5801 and then compressed and encoded by the voice data encoder 5802a in a predetermined encoding system. The resulting data is multiplexed with the encoded picture data, and then the resulting data is stored in the storage device 803.

Picture data provided by a camera 910 or the like is subjected to signal processing comprising color separation, gradation conversion and A/D conversion in a video picture input unit 815. The resulting data is then delivered to the control unit 5801 and thence to a video encoder 5802b of the picture/voice data encoder 5802. In the encoder 5802b the data is compressed and encoded in a predetermined encoding system, and then multiplexed with encoded voice data in a system multiplexer 5802c. The resulting data is then stored in the storage device 803.

The external device 800 is capable of connecting to a public network 904 by dialing via the modem 809 and then accessing to the Internet 900 via a relevant one of ISPs (Internet Service Providers) 901. When the external device 800 composes a part of a LAN (Local Area Network) 907, the external device 800 is capable of accessing the Internet via a relevant router 905 and a corresponding ISP 901 to download encoded picture/voice data from a picture/voice distribution service site (server 902) set in the Internet 900. The control unit 801 stores the downloaded encoded music data in the storage device 803.

The picture/voice data encoder 5802 comprises an audio encoder 5802a, a video encoder 5802b and a system multiplexer 5802c to separately encode the picture data and voice data transferred by the control unit 5801 while maintaining their mutual connection. The system multiplexer 5802c multiplexes the respective streams of data encoded by the audio and video encoders 5802a and 5802b, respectively, based on sync information and control information delivered by the control unit 5801 so as to fit a format of the transmission medium and then outputs resulting data to the storage device 803.

Analog voice data provided by a microphone 909 or the like is PCM encoded in an audio input unit 804. The resulting data is delivered to the control unit 5801 and then compressed and encoded by an audio encoder 5802a of the picture/voice data encoder 5802 in a predetermined encoding system. The resulting data is multiplexed with the related encoded picture data, and then the resulting data is stored in the storage device 803.

Picture data provided by a camera 910 or the like is subjected to signal processing comprising color separation, gradation conversion and A/D conversion in a video picture input unit 815. Resulting data is then delivered to the control unit 5801 and thence to a video encoder 5802b of the picture/voice data encoder 5802. The data is compressed and encoded in a predetermined encoding system in the encoder 5802b, and then multiplexed with encoded voice data in a system multiplexer 5802c. The resulting data is then stored in the storage device 803.

The audio encoder 5802a of the picture/voice data encoder 802 has the same composition as the encoder (FIGS. 5 and 6) of the first embodiment and further description thereof will be omitted.

The video decoder 5802b may comprise one of a JPEG encoder and a MPEG encoder which are shown in FIG. 28 (A) and FIG. 29A, respectively.

As shown in FIG. 28 (A), when the JPEG encoder receives an original picture signal, it converts the picture into frame blocks of 8 X 8 pixels and then rearranges the frame blocks in encoding order. The encoder then performs two-dimensional DCT on the frame blocks one at a time and separately quantizes resulting DCT coefficients with DC (Direct Current) and AC (Alternate Current) components. A differential value between a DC component of the quantized DCT coefficients and that of the immediately preceding block as a predictive value is subjected to entropy coding in a variable length encoder, using a DPCM (Differential PCM) system (reversible encoding system). Two-dimensional data of the remaining quantized AC component are arranged by a zigzag scan to provide one-dimensional data, which is then encoded.

As shown in FIG. 29A, the MPEG encoder encodes a video signal in a combined motion compensation prediction and two-dimensional DCT system. In order to perform bidirectional prediction, the video signal is coded as three kinds of I (Intra Coded), P (Predictive Coded) and B (Bidirectionally Predictive Coded) pictures. In this case, the picture frames are rearranged in encoding order and a one-frame input picture is divided into macro blocks of 16 x 16 pixels. The encoding process is performed in units of a macro block. When a one-frame input picture is divided into macro blocks, it is determined whether prediction should be used for an input block, which will be described next in more detail.

When an intraframe encoding process is performed (for I-picture) without performing interframe prediction, DCT coefficients of the input block are calculated, the calculated DCT coefficients are quantized in accordance with a quantization table specified by the encoding control unit. Its quantization width and the quantized picture data are variable-length encoded and then multiplexed into a bit stream, which is then stored in a buffer memory. In order to restore a picture (reference picture) to be used as an original picture for next prediction, a local decoding process is performed which comprises dequantizing the quantized blocks and performing inversed DCT on the DCT coefficients. The restored reference picture is stored via an adder into the frame memory 1.

For a P picture which is to be subjected to interframe prediction encoding for a macro block to be encoded, a differential between an input block and a picture predicted is calculated, using motion compensation, from a reference picture comprising an I or P picture stored in a frame memory 1. DCT coefficients about the differential are then calculated and then quantized. The quantization width and the quantized differential picture are then variable-length encoded, and multiplexed into a bit stream, which is then stored as such in a buffer memory. A relevant motion vector V detected by a motion predictor is also variable-length encoded and then transferred as output codes. In addition, the quantized differential picture is dequantized and the DCT coefficients are subjected to inversed DCT. The resulting data is then added to the predicted picture used for the calculation of the differential in the input stage to restore a picture to be used for the next prediction. The resulting data is then stored in the frame memory 1 or 2.

For a B picture, a prediction picture is created by averaging desired two of the I and P pictures stored as reference pictures in the frame memories 1 and 2 to perform forward and backward predictive processes.

A structure of a data stream of a MPEG 1 system is as shown in FIG. 30. As shown in FIG. 30 (A), a program comprises a plurality of packs and an end code. A first pack comprises a pack header, a system header which outlines a whole stream, and a series of packets.

As shown in FIG. 30 (B), the pack header comprises a pack start code, an identification code "00" to identify the pack start code from a MPEG 2-PS, a SCR (System Clock Reference) and information representing a bit rate of this stream in 50 bytes/second in this order.

As shown in FIG. 30 (C), the system header comprises a start code, a header length representing the length of the system header, and a real data section which comprises an upper rate limit, an upper audio channel limit, four flags, an upper video channel limit, a preservative byte, and a field representing a capacity of buffer memory required for each stream. The flags include a fixed flag to identify a fixed or variable bit rate, a CSPS (Constrained System Parameter Stream) flag intended to realize compatibility in the decoder, an audio lock flag representing whether an audio in the system stream is phase-locked to a system clock, and a video lock flag representing whether a video in the system stream is phase-locked to the system clock.

The N-loop comprises a stream ID, "11", an upper buffer scale limit, and an upper buffer size limit, indicating a parameter of each stream (required buffer memory capacity).

Each packet layer comprises a packet start code, a packet length code indicative of a length of packet data, a 2-bit control code taking any one of "00", "01" and "11", a stuffing or padding byte as a dummy data byte used to maintain the data at a fixed length, a buffer scale, a buffer size, a PTS (Presentation Time Stamp), a DTS (Decoding Time Stamp), and a packet data byte. The packet start code comprises a fixed value portion (prestart code) and a stream ID portion.

In operation, it is assumed that the picture/voice reproducing device 5100 is worn on the user's wrist or upper arm by the pair of wristbands 301 and 302with the pair of buckles 401 and 402 being engaged, that compressed encoded picture/voice data has been stored on the memory card 209, and that the headphones 600 is worn on the user's ears.

When the user sets the music video mode with the mode switches 203 provided on the picture/voice reproducing device 5100 and manipulates the input unit 202 for voice/video reproduction, the control unit 5101 reads picture/music data stored on the memory card 209 and stores it in the RAM 213 for reproduction of the music.

The picture/voice data is then decoded in the picture/voice data decoder 5102 . The music data decoded in the audio decoder 5102b is delivered to a music output unit 5102c where it is subjected to D/A conversion. Resulting analog music data is then delivered to the earphones 606 for outputting a corresponding musical sound. Simultaneously, a video picture decoded in a video decoder 5102d is synchronized with sync information and then displayed on the displayed unit 201.

When the user manipulates the input unit 202 of the picture/voice reproducing device 5100 for fast feed- or rewind- reproduction or for stopping the reproduction, the control unit 5101 performs a corresponding operation.

When the mode switches 203 of the picture/voice reproducing device 5100 are operated to select the timepiece mode, the control unit 5101 displays on the display unit 201 the time data obtained in the timepiece 207. The control unit 5101 also corrects the time in response to data on time correction input from the input unit 202 and displays a time representing a result of the correction on the display unit 201.

When the mode switches 203 of the picture/voice reproducing device 5100 are operated to set the communication mode, the control unit 5101 determines whether the reproducing device 5100 is properly connected to the external device 5800 via the adapter 700. If it is, the music reproducing device 5100 receives picture/voice data and music related data from the external device 5800 via the adapter 700, and writes the data to the memory card 209 under control of the read/write control unit 214.

As described above, the picture/voice reproducing device 5100 of the fifth embodiment comprises the body 200 which contains the picture/voice data decoder 5102 and the memory card 209, the pair of wristbands 301and 302 each connected at one end to a respective one of opposite edges of the body 200 for wearing the body 200 on the user's body, and the pair of buckles 401 and 402 each connected to a respective one of the other ends of the wristbands 301 and 302 so as to be engaged with each other.

Thus, with the picture/music reproducing device 5100 worn removably on the user's body, the user can listen to music output from the earphones or headphones while confirming and reproducing music reproducing information such as a title of the music and artist's name or displaying on the display unit 201 the artist's photographic picture/a video picture for music promotion. Thus, a picture/voice reproducing device rich in entertainingness, expresiveness and a quantity of information is provided.

The user is able to listen with the earphones to stereophonic voice as a sound track for a dynamic image while reproducing and displaying a digitally recorded video/dynamic image on the display unit 201 of the picture/voice reproducing device 5100. Thus, the user is able to view a dynamic image/video anywhere and anytime. Thus, a picture/voice reproducing device excellent in portability and mobility is provided.

As shown in FIGS. 17A, B, C and 18A, B, C, the picture/voice reproducing device 5100 of the fifth embodiment may be used as a portable receiving/reproducing device for receiving a network distribution service for picture data and/or a digital broadcasting service. To this end, the picture/voice reproducing device 5100 may be connected to various external devices such as the personal computer 820, portable information terminal 830, memory card adapter 810, mobile communication terminal 914 and/or data kiosk 915 to download digital encoded picture data from a server 902 (music distribution terminal) of the network 900 to thereby view a picture and/or listen to a piece of music concerned, anywhere and anytime, based on the downloaded picture data. The picture/voice reproducing device 5100 of the fifth embodiment may further comprise a removable or built-in wireless data communication function such as a wireless transmission function, a communication terminal function or a radio modem function so as to wirelessly receive with the wireless headphones music reproduced in the picture/voice reproducing device 5100 and to output the reproduced music. By doing so, the user is able to enjoy viewing a video picture displayed on the display unit 202 of the picture/voice reproducing device 5100 worn on the user's arm while listening to the music outputted from the wireless headphones. Thus, the user is not troubled with the earphone cord and the portability of this device is improved.

The picture/voice reproducing device 5100 of the fifth embodiment may further comprise a picture input unit such as a CCD (Charge Coupled Device) camera and a picture data encoder to be used as a wearable or portable video recording/reproducing device or a dynamic image communicating device. In this case, digital picture data recorded in the picture input unit may be encoded by the picture data recorder and stored on the memory card 209. The picture data recorded on the memory card 209 may be reproduced as requested. As shown in FIGS. 17A, B, C and 18A, B, C, the reproducing device 5100 may be connected to the mobile communication terminal 915 to send the picture data recorded on the memory card 209 to an external data communication device (personal computer 820 or portable information terminal 830). The body 200 of the reproducing device 5100 may have a built-in wireless communicating function to wirelessly send the picture data to the external data communication device.

The details of the embodiments of the present invention may be changeable without departing from the scope of the appended claims.

## Claims

1. A wristwatch with an integrated music reproducing apparatus, comprising:
an apparatus body (200) having first opposite sides and second opposite sides perpendicular to the first opposite sides;
a band (301, 302) for wearing said apparatus body on a user's wrist, the band capable of connecting the first opposite sides together;
a storage device (209; 213) provided on one of said apparatus body and said band, said storage device having stored music data; and
a music reproducing means (211, 212) for reproducing music based on the music data stored in said storage device,
**characterized in that** said apparatus body further comprises:
a first connector (205) for connection to an external device (800), said first connector provided on one of the second opposite sides of the apparatus body;
a write control means (214) for controlling writing to the storage means the music data delivered from the external device connected to the first connector; and
a second connector (206) for connecting an adapter (500) to a music hearing unit (606) to transmit music reproduced by said music reproducing means to said music hearing unit, said second connector provided on the other of the second opposite sides.

2. The wristwatch according to claim 1, wherein said storage device comprises a semiconductor storage medium provided removably on one of said apparatus body and said band.

3. The wristwatch according to claim 1 or 2, wherein said apparatus body may further comprise:
a display unit (201); and
display control means (210) for displaying on the display unit data on music reproduced by the music reproducing means.

4. The wristwatch body according to claim 3, further comprising
a timepiece means (207) for measuring time data; and
wherein said display control means (210) is further adapted for displaying on said display unit the time data measured by said timepiece means.

5. This wristwatch according to claim 4, further comprising
a mode setting means (203) for setting one of a timepiece mode and a music mode; and
a control means (210) for controlling the display control means such that the time data is displayed on said display unit when the time mode is set by the mode setting means and for controlling the music reproducing means such that music is reproduced when the music mode is set by the mode setting means.

6. The wristwatch according to claim 5, wherein
said mode setting means (203) is further adapted for setting one of a communication mode and a music mode; and
said control means (210) is further adapted for controlling the write control means to write to the storage means the music data delivered from the external device when the communication mode is set by the mode setting means and for controlling the music reproducing means to reproduce music when the music mode is set by said mode setting means.

7. The wristwatch according to any of claims 1 to 6, wherein said adapter comprises a connection element (501) to be connected to the second connector, and a jack (502) for receiving a plug (601 a) of the music hearing unit.

8. The wristwatch according to any of claims 1 to 7, further comprising
a radio transmitter (2202; 2500) for transmitting the music reproduced by said music reproducing unit to a wireless music hearing unit (2100).

9. The wristwatch according to claim 8, wherein said radio transmitter (2202; 2500) is integrated into said adapter.

10. The wristwatch according to any of claims 1 to 9, further comprising:
a radio transmission/reception unit (218) for wirelessly receiving the music data from the external device.

11. The wristwatch according to claim 10, wherein the radio transmission/reception unit (218) performs a radio communication function using one of infrared rays, electromagnetic induction, and weak radio waves.

12. The wristwatch according to any of claims 1 to 11, further comprising:
a communication means (218) for connecting to a music distribution terminal (902) accessible via a network (900, 917) in accordance with a user's music distribution request; and
a storage control means (210) for storing in the storage means music data downloaded from the music distribution terminal by the communication means.

13. A music reproducing system (1000) comprising
a wristwatch with an integrated music reproducing apparatus according to any of claims 1 to 12; and
an external device (800, 820, 914, 915), said external device comprising:
a second storage means (813) for storing music data;
a sending means (801, 825) for sending the music reproducing device the music data stored in the second storage means;
a communicating means (809, 808, 218) for connecting to a music distribution terminal (920) accessible via a network (900); and
a storage control means (801) for storing in the second storage means music data downloaded from the music distribution terminal by the communicating means.

## Patentansprüche

1. Armbanduhr mit einer integrierten Musikwiedergabevorrichtung, umfassend:
einen Gerätekörper (200) mit ersten gegenüberliegenden Seiten und zweiten gegenüberliegenden Seiten senkrecht zu den ersten gegenüberliegenden Seiten;
einem Band (301, 302) zum Tragen des Gerätekörpers am Handgelenk eines Benutzers, wobei das Band dazu geeignet ist, die ersten gegenüberliegenden Seiten miteinander zu verbinden;
eine Speichervorrichtung (209, 213), die auf dem Gerätekörper oder dem Band vorgesehen ist und gespeicherte Musikdaten enthält; und
eine Musikwiedergabevorrichtung (211, 212) zur Reproduktion von Musik auf Basis der in der Speichervorrichtung gespeicherten Musikdaten,
**dadurch gekennzeichnet,**
**dass** der Gerätekörper des Weiteren umfasst:
einen ersten Anschluss (205) für den Anschluss an eine externe Vorrichtung (800), wobei der erste Anschluss auf einer der zweiten gegenüberliegenden Seiten des Gerätekörpers vorgesehen ist;
eine Schreibsteuereinrichtung (214) zur Steuerung des Schreibens der von dem an dem ersten Anschluss angeschlossenen externen Gerät gelieferten Musikdaten auf die Speichereinrichtung; und
einen zweiten Anschluss (206) für den Anschluss eines Adapters (500) für eine Musikhöreinrichtung (606) zur Übertragung der von der Musikwiedergabeeinrichtung wiedergegebenen Musik an die Musikhöreinheit, wobei der zweite Anschluss auf der anderen der zweiten gegenüberliegenden Seiten vorgesehen ist.

2. Armbanduhr nach Anspruch 1, wobei die Speichereinrichtung ein Halbleiterspeichermedium umfasst, das auf dem Gerätekörper oder dem Band abnehmbar vorgesehen ist.

3. Armbanduhr nach Anspruch 1 oder 2, wobei der Gerätekörper des Weiteren umfasst:
eine Anzeigeeinheit (201); und
eine Anzeigesteuereinrichtung (210) zur Anzeige von Daten über die von der Musikwiedergabeeinrichtung wiedergegebenen Musik auf der Anzeigeeinheit.

4. Armatur nach Anspruch 3, des Weiteren umfassend:
eine Uhreneinrichtung (207) zur Messung von Zeitdaten; und
wobei die Anzeigesteuereinrichtung (210) des Weiteren dazu eingerichtet ist, die von der Uhreneinrichtung gemessenen Zeitdaten auf der Anzeigeeinheit anzuzeigen.

5. Armbanduhr nach Anspruch 4, des Weiteren umfassend:
eine Modus-Einstelleinrichtung (203) zur Einstellung eines Uhrenmodus oder eines Musikmodus; und
eine Steuereinrichtung (210) zur Steuerung der Anzeigesteuerungseinrichtung, so dass die Zeitdaten auf der Anzeigeeinheit angezeigt werden, wenn der Zeitmodus durch die Moduseinstelleinrichtung eingestellt ist, und zur Steuerung der Musikwiedergabeeinrichtung, so dass Musik wiedergegeben wird, wenn der Musikmodus durch die Moduseinstelleinrichtung eingestellt ist.

6. Armbanduhr nach Anspruch 5, wobei
die Moduseinstelleinrichtung (203) des Weiteren dazu eingerichtet ist, einen Übertragungsmodus oder einen Musikmodus einzustellen; und
die Steuereinrichtung (210) des Weiteren dazu eingerichtet ist, die Schreibsteuereinrichtung so zu steuern, dass die von dem externen Gerät gelieferten Musikdaten auf die Speichereinrichtung geschrieben werden, wenn der Übertragungsmodus durch die Moduseinstelleinrichtung eingestellt ist, und die Musikwiedergabeeinrichtung so zu steuern, dass Musik wiedergegeben wird, wenn der Musikmodus durch die Moduseinstelleinrichtung eingestellt ist.

7. Armbanduhr nach einem der Ansprüche 1 bis 6, wobei der Adapter ein Verbindungselement (501), das mit dem zweiten Anschluss zu verbinden ist, und eine Buchse (502) zur Aufnahme eines Steckers (601a) der Musikhöreinheit umfasst.

8. Armbanduhr nach einem der Ansprüche 1 bis 7, des Weiteren umfassend
einen Radiosender (2202; 2500) zur Übertragung der von der Musikwiedergabeeinheit wiedergegebenen Musik an eine drahtlose Musikhöreinheit (2100).

9. Armbanduhr nach Anspruch 8, wobei der Radiosender (2202, 2500) in dem Adapter integriert ist.

10. Armbanduhr nach einem der Ansprüche 1 bis 9, des Weiteren umfassend:
eine Radiosende- und Empfangseinheit (218) zum drahtlosen Empfangen der Musikdaten von dem externen Gerät.

11. Armbanduhr nach Anspruch 10, wobei die Radiosende- und Empfangseinheit (218) eine Radioübertragungsfunktion unter Verwendung von Infrarotstrahlen, elektromagnetischer Induktion oder schwachen Radiowellen ausführt.

12. Armbanduhr nach einem der Ansprüche 1 bis 11, des Weiteren umfassend:
eine Übertragungseinrichtung (218) zum Verbinden mit einem Musikverteilungsterminal (902), auf das über ein Netzwerk (900, 917) in Übereinstimmung mit einer Musikverteilungsanfrage eines Benutzers zugegriffen werden kann; und
einer Speichersteuereinrichtung (210) zur Speicherung der von dem Musikverteilungsterminal durch die Übertragungseinrichtung heruntergeladenen Musikdaten in der Speichereinrichtung.

13. Musikwiedergabesystem (1000), umfassend:
eine Armbanduhr mit einer integrierten Musikwiedergabevorrichtung gemäß einem der Ansprüche 1 bis 12; und
einer externen Vorrichtung (800, 820, 914, 915), wobei die externe Vorrichtung umfasst:
eine zweite Speichereinrichtung (813) zur Speicherung von Musikdaten;
eine Sendeeinrichtung (801, 825) zum Senden der in der zweiten Speichereinrichtung gespeicherten Musikdaten an die Musikwiedergabevorrichtung;
eine Übertragungseinrichtung (809, 808, 218) zum Verbinden mit einem Musikverteilungsterminal (920), auf das über ein Netzwerk (900) zugegriffen werden kann; und
eine Speichersteuereinrichtung (801) zur Speicherung der durch die Übertragungseinrichtung von dem Musikverteilungsterminal heruntergeladenen Musikdaten in der zweiten Speichereinrichtung.

## Revendications

1. Montre-bracelet équipée d'un dispositif intégré de reproduction de musique, comportant :
un corps de dispositif (200), possédant des premières faces opposées, et des secondes faces opposées, perpendiculaires aux premières faces opposées ;
un bracelet (301, 302) permettant de porter ledit corps de dispositif sur un poignet d'utilisateur, le bracelet étant capable de relier mutuellement les premières faces opposées ;
un dispositif de stockage (209 ; 213) placé sur l'un dudit corps de dispositif ou dudit bracelet, ledit dispositif de stockage contenant des données musicales ; et
un moyen de reproduction de musique (211, 212), destiné à reproduire de la musique en fonction des données musicales stockées dans ledit dispositif de stockage ;
**caractérisé en ce que** ledit corps de dispositif comporte en outre :
un premier connecteur (205) permettant la connexion à un dispositif externe (800), ledit premier connecteur étant placé sur l'une desdites secondes faces opposées du corps de dispositif ;
un moyen de commande d'écriture (214) destiné à commander l'écriture sur le moyen de stockage des données musicales produites par le dispositif externe connecté au premier connecteur ; et
un second connecteur (206) permettant la connexion d'un adaptateur (500) à une unité d'écoute de musique (606) afin de transmettre la musique reproduite par ledit moyen de reproduction de musique à ladite unité d'écoute de musique, ledit second connecteur étant placé sur les autres desdites secondes faces opposées.

2. Montre-bracelet selon la revendication 1, dans laquelle ledit dispositif de stockage comporte un support de stockage à semi-conducteurs placé de manière à pouvoir être démonté de l'un dudit corps de dispositif ou dudit bracelet.

3. Montre-bracelet selon la revendication 1 ou 2, dans lequel ledit corps de dispositif peut en outre comporter :
une unité d'affichage (201) ; et
un moyen de commande d'affichage (210) destiné à afficher, sur l'unité d'affichage, des données concernant la musique reproduite par le moyen de reproduction de musique.

4. Corps de montre-bracelet selon la revendication 3, comportant en outre :
un moyen constituant montre (207) destiné à mesurer des données de temps ; et
dans lequel ledit moyen de commande d'affichage (210) est en outre adapté à afficher, sur ladite unité d'affichage, les données temporelles mesurées par ledit moyen constituant montre.

5. Montre-bracelet selon la revendication 4, comportant en outre :
un moyen de définition de mode (203) destiné à définir un mode montre et un mode musique ; et
un moyen de commande (210) destiné à commander le moyen de commande d'affichage de telle sorte que les données de temps soient affichées sur ladite unité d'affichage lorsque le mode temporel est défini par le moyen de définition de mode et pour commander le moyen de reproduction de musique de telle sorte que de la musique soit reproduite lorsque le mode musique est défini par le moyen de définition de mode.

6. Montre-bracelet selon la revendication 5, dans lequel
ledit moyen de définition de mode (203) est en outre conçu pour définir l'un d'un mode communication ou d'un mode musique ; et
ledit moyen de commande (210) est en outre conçu pour commander le moyen de commande d'écriture pour écrire, dans le moyen de stockage, des données musicales produites par le dispositif externe lorsque le mode de communication est défini par le moyen de définition de mode, et pour commander le moyen de reproduction de musique pour reproduire de la musique lorsque le mode musique est défini par ledit moyen de définition de mode.

7. Montre-bracelet selon l'une des revendications 1 à 6, dans lequel ledit adaptateur comporte :
un élément de connexion (501) destiné à être connecté au second connecteur, et une prise (502) destinée à recevoir une fiche (601a) de l'unité d'écoute de musique.

8. Montre-bracelet selon l'une des revendications 1 à 7, comportant en outre :
un émetteur radio (2202 ; 2500) destiné à émettre la musique reproduite par ladite unité de reproduction de musique vers une unité d'écoute de musique sans fil (2100).

9. Montre-bracelet selon la revendication 8, dans lequel ledit émetteur radio (2202 ; 2500) est intégré dans ledit adaptateur.

10. Montre-bracelet selon l'une des revendications 1 à 9, comportant en outre :
une unité d'émission/réception radio (218) destinée à recevoir sans fil des données musicales issues du dispositif externe.

11. Montre-bracelet selon la revendication 10, dans lequel l'unité d'émission/réception radio (218) met en oeuvre une fonction de communication radio en utilisant au choix, un rayonnement infrarouge, une induction électromagnétique ou des ondes radio de faible puissance.

12. Montre-bracelet selon l'une des revendications 1 à 11, comportant en outre :
un moyen de communication (218) destiné à permettre la connexion à un terminal de distribution de musique (902), accessible par un réseau (900, 917) en fonction d'une demande de distribution de musique d'un utilisateur ; et
un moyen de commande de stockage (210) destiné à stocker, dans le moyen de stockage, des données de musique téléchargées à partir du terminal de distribution de musique par le moyen de communication.

13. Système de reproduction de musique (1000) comportant :
une montre-bracelet, possédant un dispositif intégré de reproduction de musique, selon l'une des revendications 1 à 12 ; et
un dispositif externe (800, 820, 914, 915), ledit dispositif externe comportant :
un second moyen de stockage (813) destiné à stocker des données de musique ;
un moyen d'envoi (801, 825), destiné à envoyer au dispositif de reproduction de musique les données musicales stockées dans le second moyen de stockage ;
un moyen de communication (809, 808, 218) permettant la connexion à un terminal de distribution de musique (920), accessible par un réseau (900) ; et
un moyen de commande de stockage (801) destiné à stocker, dans le second moyen de stockage, des données musicales téléchargées à partir du terminal de distribution de musique par le moyen de communication.
